# EUROPEAN PATENT APPLICATION

(11) **EP 4 513 936 A1**
(43) Date of publication of application: **26.02.2025**
(21) Application number: 22938495.3
(22) Date of filing: 20.04.2022
(51) Int. Cl.: H04W 16/28, H04W 72/20

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/018324
(87) International publication number: WO 2023/203695

(57) **Abstract**

A terminal according to one aspect of the present disclosure includes: a receiving section that receives indication information of multiple transmission configuration indication (TCI) states to be applied to multiple signals; and a control section that determines, when a reference signal for beam failure detection to be used for beam failure detection or a reference signal for radio link monitoring to be used for radio link monitoring is not configured, the reference signal for beam failure detection or the reference signal for radio link monitoring, based on one or multiple TCI states among the multiple TCI states.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

It is studied to apply a configured/activated/indicated TCI state to multiple types of signals (channels/RSs). It is also studied to use such multiple TCI states.

In NR, a terminal performs radio link monitoring (RLM)/beam failure detection (BFD).

However, when a TCI state(s) to be applied to multiple types of signals (channels/RSs) is supported, how to perform RLM/BFD is not clear. Unless RLM/BFD is appropriately performed, throughput reduction or communication quality degradation may occur.

In view of this, an object of the present disclosure is to provide a terminal, a radio communication method, and a base station that enable appropriate performance of at least one of RLM and BFD even when a TCI state(s) to be applied to multiple types of signals (channels/RSs) is supported.

### Solution to Problem

A terminal according to one aspect of the present disclosure includes: a receiving section that receives indication information of multiple transmission configuration indication (TCI) states to be applied to multiple signals; and a control section that determines, when a reference signal for beam failure detection to be used for beam failure detection or a reference signal for radio link monitoring to be used for radio link monitoring is not configured, the reference signal for beam failure detection or the reference signal for radio link monitoring, based on one or multiple TCI states among the multiple TCI states.

### Advantageous Effects of Invention

According to one aspect of the present disclosure, it is possible to appropriately perform at least one of RLM and BFD even when a TCI state(s) to be applied to multiple types of signals (channels/RSs) is supported.

### Brief Description of Drawings

[FIG. 1] FIG. 1 is a diagram to show an example of the number of RLM-RSs.
[FIG. 2] FIG. 2 is a diagram to show an example of a beam recovery procedure.
[FIG. 3] FIG. 3A and FIG. 3B are each a diagram to show an example of communication of a moving object and transmission points (for example, RRHs).
[FIG. 4] FIG. 4A to FIG. 4C are diagrams to show an example of schemes 0 to 2 related to an SFN.
[FIG. 5] FIG. 5A and FIG. 5B are each a diagram to show an example of a common beam.
[FIG. 6] FIG. 6A and FIG. 6B are each a diagram to show an example of a case where multiple common TCI states are indicated.
[FIG. 7] FIG. 7A and FIG. 7B are diagrams to show respective examples of single-DCI based multi-TRP transmission and multi-DCI based multi-TRP transmission.
[FIG. 8] FIG. 8A and FIG. 8B are each a diagram to show an example of a TCI field in DCI.
[FIG. 9] FIG. 9A and FIG. 9B are diagrams to show an example of joint TCI state configuration/indication in single-DCI based multi-TRP.
[FIG. 10] FIG. 10A and FIG. 10B are diagrams to show an example of separate TCI state configuration/indication in single-DCI based multi-TRP.
[FIG. 11] FIG. 11A and FIG. 11B are diagrams to show an example of joint TCI state configuration/indication corresponding to a CORESET pool index being a first value in multi-DCI based multi-TRP.
[FIG. 12] FIG. 12A and FIG. 12B are diagrams to show an example of joint TCI state configuration/indication corresponding to a CORESET pool index being a second value in multi-DCI based multi-TRP.
[FIG. 13] FIG. 13 is a diagram to show an example of a method of determining a BFD RS when multiple common TCI states are indicated, according to a first embodiment.
[FIG. 14] FIG. 14 is a diagram to show another example of the method of determining a BFD RS when multiple common TCI states are indicated, according to the first embodiment.
[FIG. 15] FIG. 15 is a diagram to show another example of the method of determining a BFD RS when multiple common TCI states are indicated, according to the first embodiment.
[FIG. 16] FIG. 16 is a diagram to show another example of the method of determining a BFD RS when multiple common TCI states are indicated, according to the first embodiment.
[FIG. 17] FIG. 17 is a diagram to show an example of TCI state update control after BFR completion when multiple common TCI states are indicated, according to a second embodiment.
[FIG. 18] FIG. 18 is a diagram to show another example of the TCI state update control after BFR completion when multiple common TCI states are indicated, according to the second embodiment.
[FIG. 19] FIG. 19 is a diagram to show an example of a schematic structure of a radio communication system according to one embodiment.
[FIG. 20] FIG. 20 is a diagram to show an example of a structure of a base station according to one embodiment.
[FIG. 21] FIG. 21 is a diagram to show an example of a structure of a user terminal according to one embodiment.
[FIG. 22] FIG. 22 is a diagram to show an example of a hardware structure of the base station and the user terminal according to one embodiment.
[FIG. 23] FIG. 23 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such multiple different signals/channels.

Note that the spatial reception parameter may correspond to a receive beam of the UE (for example, a receive analog beam), and the beam may be identified based on spatial QCL. The QCL (or at least one element in the QCL in the present disclosure may be interpreted as sQCL (spatial QCL).

For the QCL, multiple types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

For a PDCCH and a PDSCH, a QCL type A RS may always be configured, while a QCL type D RS may be configured additionally. Since it is difficult to estimate Doppler shift, latency, and the like, based on one-shot reception of a DMRS, the QCL type A RS is used for improvement of channel estimation accuracy. The QCL type D RS is used for receive beam determination at the time of DMRS reception.

For example, TRSs 1-1, 1-2, 1-3, and 1-4 are transmitted, and TRS 1-1 is notified as a QCL type C/D RS according to the TCI state of a PDSCH. By the TCI state being notified, the UE can use information obtained from results of past periodic reception/measurement of TRS 1-1, for reception/channel estimation of a DMRS for PDSCH. In this case, the QCL source of the PDSCH is TRS 1-1, and the QCL target is the DMRS for

### PDSCH.

### (Radio Link Monitoring (RLM))

In NR, radio link monitoring (RLM) is used.

In NR, a base station may configure, for a UE, a radio link monitoring reference signal (Radio Link Monitoring RS (RLM-RS)) for each BWP by using higher layer signaling. The UE may receive configuration information for RLM (for example, an RRC "RadioLinkMonitoringConfig" information element).

The configuration information for RLM may include failure detection resource configuration information (for example, a higher layer parameter "failureDetectionResourcesToAddModList"). The failure detection recourse configuration information may include a parameter related to an RLM-RS (for example, a higher layer parameter "RadioLinkMonitoringRS") .

The parameter related to the RLM-RS may include information indicating that the RLM-RS conforms to a purpose of the RLM, an index corresponding to the resource of the RLM-RS (for example, an index included in a higher layer parameter "failureDetectionResources" (RadioLinkMonitoringRS in failureDetectionResourcesToAddModList)), and the like. The Index may be, for example, an index of the configuration of a CSI-RS resource (for example, a non-zero power CSI-RS resource ID) or may be an SS/PBCH block index (SSB index). The information of the purpose may indicate beam failure, (cell-level) Radio Link Failure (RLF), or both of these.

The UE may identify the RLM-RS resource, based on the index corresponding to the resource of the RLM-RS and perform RLM by using the RLM-RS resource.

In Rel-16 RLM, the UE follows the following procedures.

### {Procedures}

If the UE is not provided with an RLM-RS (for example, a higher layer parameter RadioLinkMonitoringRS) and is provided with a TCI state including one or more CSI-RSs for PDCCH reception, the UE follows procedures 1 to 4 below.

### {{Procedure 1}}

If an active TCI state for PDCCH reception includes only one RS, the UE uses the RS provided for the active TCI state for PDCCH reception for RLM.

### {{Procedure 2}}

If an active TCI state for PDCCH reception includes two RSs, the UE assumes that one of the RSs is of QCL type D and uses the RS with QCL type D for RLM. The UE does not assume that both RSs are of QCL type D.

### {{Procedure 3}}

The UE is not required to use an aperiodic or semi-persistent RS for RLM.

### {{Procedure 4}}

For Lₘₐₓ = 4, the UE selects N_{RLM} RSs provided for the active TCI state for PDCCH reception, from multiple CORESETs associated with multiple search space sets, from one with the shortest monitoring periodicity. If more than one CORESET is associated with multiple search space sets with the same monitoring periodicity, the UE determines the order of CORESETs from one with the highest CORESET index.

Here, Lₘₐₓ denotes the maximum number of SS/PBCH block indices in a cell. The maximum number of SS/PBCH blocks transmitted in a half frame is Lₘₐₓ.

As described above, when the UE is not provided with an RLM-RS, the UE performs implicit RLM-RS determination and uses an active TCI state for PDCCH reception for RLM. In a case of Lₘₐₓ = 4, the UE selects N_{RLM} RSs first in ascending order of monitoring periodicities of search space sets and then in descending order of CORESET indices.

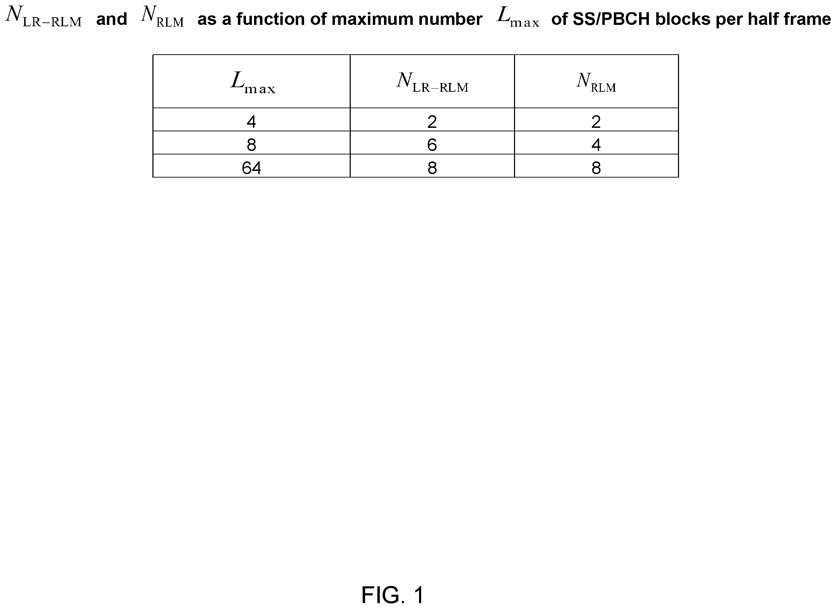

The UE can be configured with up to N_{LR-RLM} RLM-RSs for link recovery procedure and RLM. Up to N_{RLM} RLM-RSs are used for the RLM from among N_{LR-RLM} RLM-RSs depending on Lₘₐₓ. In Rel. 16, as shown in FIG. 1, N_{RLM} = 2 in a case of Lₘₐₓ = 4, N_{RLM} = 4 in a case of Lₘₐₓ = 8, and N_{RLM} = 8 in a case of Lₘₐₓ = 64. Note that the correspondence of Lₘₐₓ, N_{RLM}, and NLR-RLM is not limited to this.

### (Beam Failure Detection (BFD)/Beam Failure Recovery (BFR))

In NR, communication using beam forming is performed. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, a procedure for switching to another beam (which may be referred to as beam recovery (BR), beam failure recovery (BFR), L1/L2 (Layer 1/Layer 2) beam recovery, or the like) is performed in a case where quality of a specific beam deteriorates. Note that the BFR procedure may be referred to simply as BFR.

Note that beam failure (BF) in the present disclosure may be referred to as link failure.

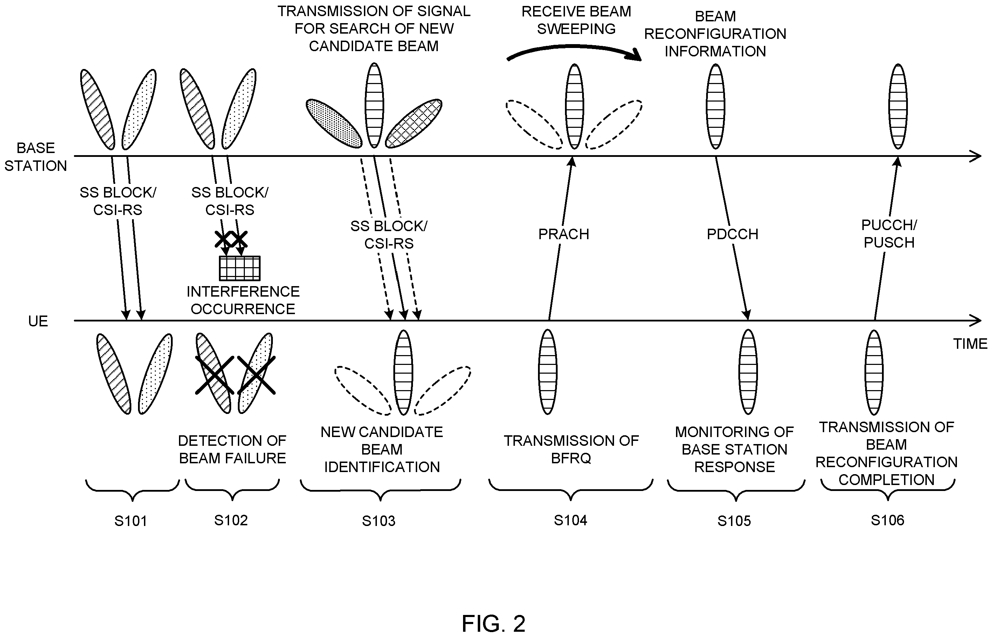

FIG. 2 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS to be used for beam recovery procedure (BFR-RS), or the like.

At step S102, the UE fails to detect the BFD-RS (or reception quality of the RS deteriorates) due to radio waves from a base station being interfered. Such interference may occur under the influence of an obstacle, fading, interference, and the like between the UE and the base station, for example.

The UE detects beam failure when a given condition is satisfied. For example, the UE may detect occurrence of the beam failure when a BLER (Block Error Rate) with respect to all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that determination standards (criteria) are not limited to the BLER, and may be reference signal received power in the physical layer (Layer 1 Reference Signal Received Power (L1-RSRP)). Instead of RS measurement or in addition to RS measurement, beam failure detection may be performed based on downlink control channel (Physical Downlink Control Channel (PDCCH)) and the like. The BFD-RS may be expected to be quasi-co-located (QCLed) with a DMRS for a PDCCH monitored by the UE.

Here, QCL is an indicator indicating statistical properties of the channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (Spatial Rx Parameter)) is the same (the relationship of QCL is satisfied in at least one of these) between such multiple different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

A higher layer (for example, the MAC layer) of the UE may start a given timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, beamFailureInstanceMaxCount configured by RRC) or more until the timer expires.

When there is no notification from the UE or when receiving a given signal (beam recovery request at step S104) from the UE, the base station may determine that the UE has detected beam failure.

At step S103, for beam recovery, the UE starts a search for a new candidate beam for use in new communication. The UE may select, by measuring a given RS, the new candidate beam corresponding to the RS. The RS measured at step S103 may be referred to as a new candidate RS, an RS for new candidate beam identification (New Candidate Beam Identification RS (NCBI-RS)), a CBI-RS, a CB-RS (Candidate Beam RS), or the like. The NCBI-RS may be the same as the BFD-RS, or may be different from the BFD-RS. Note that the new candidate beam may be referred to simply as a candidate beam or a candidate RS.

The UE may determine a beam corresponding to an RS satisfying a given condition as the new candidate beam. The UE may determine a new candidate beam from among configured NCBI-RSs, based on an RS having an L1-RSRP exceeding a threshold, for example. Note that determination standards (criteria) are not limited to the L1-RSRP. The L1-RSRP related to an SSB may be referred to as SS-RSRP. The L1-RSRP related to a CSI-RS may be referred to as CSI-RSRP.

Information related to the NCBI-RS (for example, resources, numbers, the number of ports, precoding, and the like for the RS), information related to new candidate beam identification (NCBI) (for example, the above-mentioned threshold value), and the like may be configured (notified) for the UE by using higher layer signaling or the like. The information related to the new candidate RS (or the NCBI-RS) may be acquired based on the information related to the BFD-RS. The information related to the NCBI-RS may be referred to as information related to resources for NBCI or the like.

Note that the BFD-RS, the NCBI-RS, and the like may be interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted by using at least one of an uplink control channel (Physical Uplink Control Channel (PUCCH)), random access channel (Physical Random Access Channel (PRACH)), an uplink shared channel (Physical Uplink Shared Channel (PUSCH)), and a configured grant (CG) PUSCH, for example.

The BFRQ may include information about the new candidate beam/new candidate RS identified at step S103. Resources for the BFRQ may be associated with the new candidate beam. The information about the beam may be notified by using a beam index (BI), a port index of a given reference signal, an RS index, a resource index (for example, a CSI-RS resource indicator (CRI), an SSB resource indicator (SSBRI)), or the like.

In Rel-15 NR, CB-BFR (Contention-Based BFR) that is BFR based on a contention-based random access (RA) procedure and CF-BFR (Contention-Free BFR) that is BFR based on a non-contention based random access procedure are studied. In the CB-BFR and the CF-BFR, the UE may transmit a preamble (also referred to as an RA preamble, a random access channel (Physical Random Access Channel (PRACH)), a RACH preamble, or the like) as the BFRQ by using PRACH resources.

In the CB-BFR, the UE may transmit a preamble randomly selected from one or multiple preambles. In contrast, in the CF-BFR, the UE may transmit a preamble allocated in a UE-specific manner by the base station. In the CB-BFR, the base station may allocate the same preamble to multiple UEs. In the CF-BFR, the base station may allocate a preamble in a UE-specific manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In any case of the CB-BFR or the CF-BFR, information related to the PRACH resource (RA preamble) may be notified by higher layer signaling (RRC signaling or the like), for example. For example, the information may include information indicating a correspondence between a detected DL-RS (beam) and the PRACH resource, and a different PRACH resource may be associated for each DL-RS.

At step S105, the base station that has detected the BFRQ transmits a response signal (which may be referred to as a gNB response or the like) in response to the BFRQ from the UE. The response signal may include reconfiguration information about one or multiple beams (for example, DL-RS resource configuration information).

The response signal may be transmitted in, for example, a UE-common search space of a PDCCH. The response signal may be notified by using a PDCCH (DCI) having a cyclic redundancy check (CRC) scrambled by an identifier (for example, a cell-radio RNTI (C-RNTI)) of the UE. The UE may determine at least one of a transmit beam and a receive beam to use, based on beam reconfiguration information.

The UE may monitor the response signal, based on at least one of a control resource set (CORESET) for BFR and a search space for BFR.

With respect to the CB-BFR, when the UE receives a PDCCH corresponding to a C-RNTI related to the UE itself, it may be determined that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, and the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a given number of times or a case that a beam failure recovery timer (Beam-failure-recovery-Timer) has expired.

In Rel. 15, it is supported that a beam recovery procedure for a beam failure detected in an SpCell (PCell/PSCell) (for example, notification of BFRQ) is performed by using a random access procedure. Meanwhile, in Rel. 16, it is supported to perform a beam recovery procedure for a beam failure detected in an SCell (for example, notification of BFRQ) by using at least one of transmission of a PUCCH (for example, a scheduling request (SR)) for BFR and transmission of a MAC CE (for example, a UL-SCH) for BFR.

For example, the UE may transmit information related to the beam failure by using two MAC CE-based steps. The information related to the beam failure may include information related to a cell in which the beam failure has been detected and information related to a new candidate beam (or a new candidate RS index).

### {Step 1}

When a BF is detected, a PUCCH-BFR (scheduling request (SR)) may be transmitted from the UE to a PCell/PSCell. Subsequently, a UL grant (DCI) for step 2 below may be transmitted from the PCell/PSCell to the UE. When a beam failure is detected and a MAC CE (or a UL-SCH) for transmitting information related to a new candidate beam is present, step 1 (for example, PUCCH transmission) may be omitted, and step 2 (for example, MAC CE transmission) may be performed.

### {Step 2}

Subsequently, the UE may transmit information related to a (failed) cell in which the beam failure has been detected (for example, a cell index) and the information related to the new candidate beam, to the base station (PCell/PSCell) on an uplink channel (for example, a PUSCH) by using a MAC CE. Thereafter, through the BFR procedure, QCL of a PDCCH/PUCCH/PDSCH/PUSCH may be updated to a new beam a given period (for example, 28 symbols) after reception of a response signal from the base station.

Note that these step numbers are just numbers for description, and a plurality of steps may be combined with each other, or the order of the steps may be changed. Whether to perform the BFR may be configured for the UE by using higher layer signaling.

### (BFD-RS)

In Rel. 16, for each BWP of one serving cell, a UE can be provided with a set q₀-bar of periodic (P)-CSI-RS resource configuration indices by failure detection resources (failureDetectionResources, failureDetectionResourcesToAddModList, RadioLinkMonitoringConfig) and one set q₁-bar of at least one of P-CSI-RS resource configuration indices and SS-PBCH block indices by a candidate beam RS list (candidateBeamRSList), an extended candidate beam RS list (candidateBeamRSListExt-r16), or a candidate beam RS list for SCell (candidateBeamRSSCellList-r16).

Here, q₀-bar corresponds to a representation of "q₀" with an overline. In the following, q₀-bar is represented simply as q₀. q₁-bar corresponds to a representation of "q₁" with an overline. In the following, q₁-bar is represented simply as q₁.

The set q₀ of P-CSI-RS resources provided by the failure detection resources may be referred to as explicit BFD-RSs.

The UE may use an RS resource corresponding to an index included in at least one set of the set q₀ and the set q₁ to perform L1-RSRP measurement and the like, to detect beam failure.

Note that, in the present disclosure, the above-described higher layer parameter indicating information of indices corresponding to resources for BFD being provided may be interpreted as resources for BFD being configured, BFD-RSs being configured, and the like, and vice versa. In the present disclosure, resources for BFD, set q₀ of periodic CSI-RS resource configuration indices or SSB indices, BFD-RSs, a BFD-RS set, and an RS set may be used interchangeably.

If the UE is not provided with q₀ by failure detection resources (failureDetectionResources) for one BWP of the serving cell, the UE determines to include, in the set q₀, P-CSI-RS resource configuration indices having the same values as those of the RS indices in the RS set indicated by a TCI state (TCI-State) for the corresponding CORESET to be used by the UE for monitoring of a PDCCH. If two RS indices are present in one TCI state, the set q₀ includes RS indices with a QCL type D configuration for the corresponding TCI state. The UE assumes that the set q₀ includes up to two RS indices. The UE assumes single-port RSs in the set q₀.

This set q₀ may be referred to as implicit BFD RSs (for example, implicit BFR-RSs).

In this way, the UE determines reference signals (BFD-RSs (RS set)) to be used for beam failure detection/beam recovery procedure according to a TCI state for PDCCH. The UE assumes that the RS set includes up to two RSs.

### (Per-TRP BFR)

In Rel. 17, it is assumed that BFR per TRP is supported in a PCell/PSCell and an SCell.

For two TRPs of one CC (or cell), two BFD-RS sets/two NBI-RS sets may be configured. For example, per-TRP BFR for a multi-TRP inter-cell (MTRP inter-cell) case may be supported. An SSB related to an additional PCI may be configured as an NBI-RS in one NBI-RS set.

A TRP-specific BFD counter/timer/SR configuration may be supported. For example, association between an SR configuration for BFR and a BFD-RS set may be supported in one CC.

Simultaneous configuration of BFR per cell of Rel. 15/16 and BFR per TRP in one CC of Rel. 17 or later versions need not be supported. For example, either BFR per cell or BFR per TRP is configured for a certain cell (or for each cell).

In per-cell BFR of Rel. 15, even when a BFD-RS is configured only by RRC and a TCI state of a PDCCH is updated by a MAC CE, update of the BFD-RS by a MAC CE has not been supported. However, in per-TRP BFR supported in Rel. 17 or later versions, a MAC CE indicating an explicit BFD-RS may be introduced.

### (SFN-CORESET/SFN PDCCH)

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

In Rel. 17 or later versions, to support HTS/URLLC, it is assumed to introduce a CORESET (SFN-CORESET/SFN-PDCCH) for single frequency network (SFN). The SFN-CORESET may be a CORESET having two TCI states.

In Rel. 17 or later versions, enhancements 1 and 2 below related to a PDCCH/CORESET are studied.

In a case where multiple antennas (small antennas, transmission/reception points) having the same cell ID form a single frequency network (SFN), two TCI states can be configured/activated at maximum for one CORESET by higher layer signaling (RRC signaling/MAC CE) (enhancement 1). An SFN contributes to improvement of at least one of management and reliability of an HST (high speed train).

In PDCCH repetition transmission (which may be simply referred to as "repetition"), two PDCCH candidates in two search space sets are linked, and each search space set is associated with a corresponding CORESET (enhancement 2). The two search space sets may be associated with the same or different CORESETs. For one CORESET, one TCI state (one at maximum) may be configured/activated by higher layer signaling (RRC signaling/MAC CE).

If two search space sets are associated with different CORESETs having different TCI states, this may mean multi-TRP repetition transmission. If two search space sets are associated with the same CORESET (CORESETs having the same TCI state), this may mean single-TRP repetition transmission.

### (HST)

In LTE, arrangement in a tunnel for an HST (high speed train) is difficult. A large antenna performs transmission to the outside/inside of a tunnel. For example, such a large antenna has transmission power of approximately 1 to 5 W. For handover, it is important to perform transmission to the outside of a tunnel before a UE enters the tunnel. For example, a small antenna has transmission power of approximately 250 mW. Multiple small antennas (transmission/reception points) having the same cell ID and having a distance of 300 m form a single frequency network (SFN). All the small antennas in such an SFN transmit identical signals on the same PRB at the same time. It is assumed that a terminal performs transmission to/reception from one base station. In actual, multiple transmission/reception points transmit identical DL signals. At high-speed movement, transmission/reception points in several km units form one cell. Handover is performed at the time of moving over cells. In this way, it is possible to reduce handover frequency.

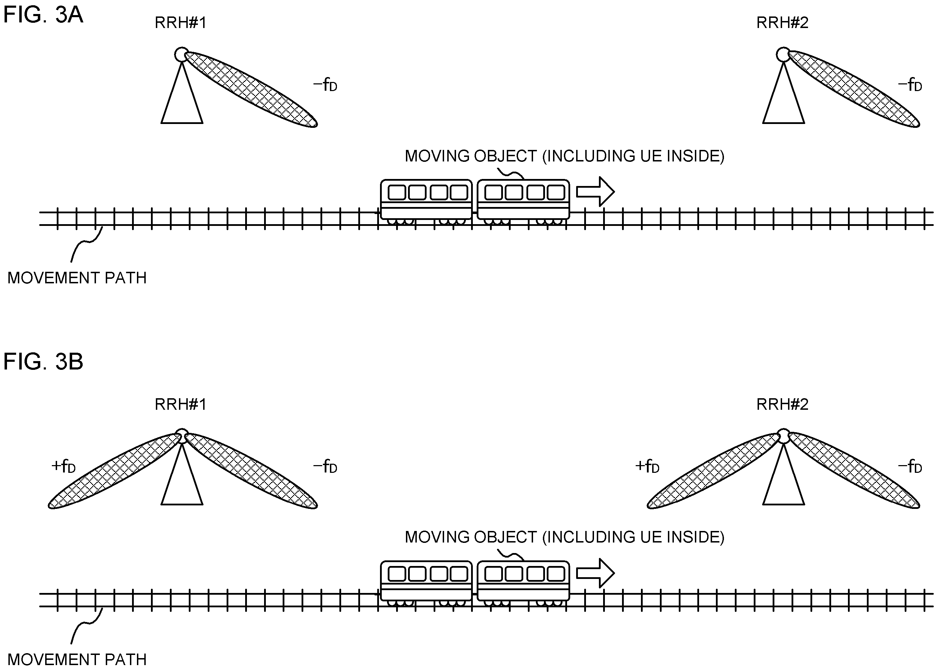

In NR, it is assumed that, to perform communication with a terminal (also referred to as a UE below) included in a moving object such as a train moving at high speed (HST (high speed train)), beams transmitted from transmission points (for example, RRHs) are used. An existing system (for example, Rel. 15) supports to transmit a uni-directional beam from each RRH to perform communication with a moving object (see FIG. 3A).

FIG. 3A shows a case where RRHs are installed along a movement path (or a movement direction, travel direction, traveling path) of the moving object and a beam is formed in the travel direction of the moving object from each RRH. The RRH forming a unidirectional beam may be referred to as a uni-directional RRH. In the example shown in FIG. 3A, the moving object receives a minus Doppler shift (-fD) from each RRH.

Note that, although a case where each beam is formed in the travel direction of the moving object is formed is shown here, this is not restrictive. Each beam may be formed in the opposite direction to the travel direction or may be formed in any direction irrespective of the travel direction of the moving object.

In Rel. 16 or later versions, it is also assumed that multiple (for example, two or more) beams are transmitted from each RRH. For example, it is assumed that beams are formed in both a travel direction of a moving object and the opposite direction to the travel direction (see FIG. 3B).

FIG. 3B shows a case where RRHs are installed along a movement path of the moving object and beams are formed in both the travel direction of the moving object and the opposite direction to the travel direction from each RRH. The RRH forming multi-directional (for example, bi-directional) beams may be referred to as a bi-directional RRH.

In this HST, a UE performs communication similarly to a single TRP. In base station implementation, transmission can be performed from multiple TRPs (same cell ID).

In the example in FIG. 3B, when two RRHs (here, RRH #1 and RRH #2) use an SFN, signals are switched from a signal that has received a minus Doppler shift to a signal that has received a plus Doppler shift increasing a power, when the moving object is midway between the two RRHs. In this case, the maximum change width of Doppler shift requiring compensation is a change from -fD to +fD, which is twice as much as that of a case with uni-directional RRHs.

Note that, in the present disclosure, a plus Doppler shift may be interpreted as information related to a plus Doppler shift, a plus (positive)-direction Doppler shift, and plus (positive)-direction Doppler information. A minus Doppler shift may be interpreted as information related to a minus Doppler shift, a minus (negative)-direction Doppler shift, and minus (negative)-direction Doppler information.

Here, as a scheme for HST (or an SFN scheme), scheme 0 to scheme 2 below (HST scheme 0 to HST scheme 2) are compared.

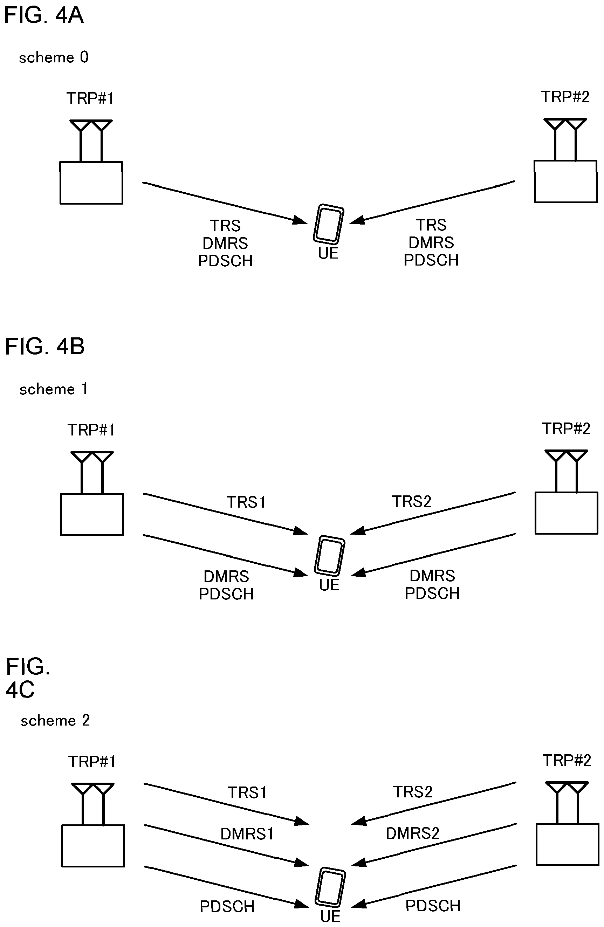

In scheme 0 in FIG. 4A, a tracking reference signal (TRS), a DMRS, and a PDSCH are transmitted commonly from two TRPs (RRHs) (by using the same time and the same frequency resources) (normal SFN, transparent SFN, HST-SFN).

In scheme 0, since a UE receives DL channels/signals on the equivalent of a single TRP, the number of TCI states of the PDSCHs is one.

Note that, in Rel. 16, an RRC parameter for differentiating transmission using a single TRP and transmission using an SFN is defined. When a UE reports corresponding UE capability information, the UE may differentiate reception of a DL channel/signal from a single TRP and reception of PDSCHs assuming an SFN, based on the RRC parameter. Meanwhile, the UE may perform transmission/reception using an SFN on the assumption of a single TRP.

In scheme 1 in FIG. 4B, each TRS is transmitted in a TRP-specific manner (by using a different time/frequency resource from each TRP). In this example, TRS1 is transmitted from TRP #1, and TRS2 is transmitted from TRP #2.

In scheme 1, since a UE receives a DL channel/signal from each TRP by using a TRS from the TRP, the number of TCI states of the PDSCHs is two.

In scheme 2 in FIG. 4C, each TRS and each DMRS are transmitted in a TRP-specific manner. In this example, TRS1 and DMRS1 are transmitted from TRP #1, and TRS2 and DMRS2 are transmitted from TRP #2. Schemes 1 and 2 can suppress an abrupt change in Doppler shift and estimate/compensate a Doppler shift appropriately, compared to scheme 0. Since scheme 2 uses a larger number of DMRSs than the number of DMRSs in scheme 1, the maximum throughput in scheme 2 is lower than that in scheme 1.

In scheme 0, the UE switches a single TRP and an SFN, based on higher layer signaling (RRC information element/MAC CE).

The UE may switch scheme 1/scheme 2/NW pre-compensation scheme, based on higher layer signaling (RRC information element/MAC CE).

In scheme 1, two respective TRS resources are configured for the travel direction of the HST and the opposite direction to the travel direction.

For Rel. 17 or later versions, it is studied to use a TCI field (TCI state field) to dynamically switch a single TRP and an SFN. For example, by using an RRC information element/MAC CE (for example, Enhanced TCI States Activation/Deactivation for UE-specific PDSCH MAC CE)/DCI (TCI field), one or two TCI states are configured/indicated at each TCI codepoint (codepoint in the TCI field, DCI codepoint). When the UE is configured/indicated with one TCI state, the UE may determine to receive a PDSCH from a single TRP. When the UE is configured/indicated with two TCI states, the UE may determine to receive PDSCHs of an SFN using multi-TRP.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels. The common TCI state may be referred to as an indicated TCI state.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (> 1) TCI states may be activated by a MAC CE. UL/DL DCI may select one from the X active TCI states. The selected TCI state may be applied to channels/RSs of both UL and DL.

The TCI pool (set) may be multiple TCI states configured by an RRC parameter or multiple TCI states (active TCI states, active TCI pool, set) activated by a MAC CE among the multiple TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) to be applied to a UL channel/RS and the number M (≥ 1) of TCI states (DL TCI states) to be applied to a DL channel/RS may be defined. At least one of N and M may be notified/configured/indicated to a UE by higher layer signaling or physical layer signaling.

In the present disclosure, when it is described as N = M = X (where X is any integer), this may mean that X TCI states (corresponding to X TRPs) common to UL and DL (joint TCI states) are notified/configured/indicated to a UE.

When it is described as N = X (where X is any integer) and M = Y (where Y is any integer, Y may be equal to X (Y = X)), this may mean that X UL TCI states (corresponding to X TRP(s)) and Y DL TCI states (corresponding to Y TRP(s)) are notified/configured/indicated to a UE. The UL TCI states and the DL TCI state(s) may each mean a TCI state common to UL and DL (in other words, a joint TCI state) or may each mean a TCI state separately for either UL or DL (in other words, a separate TCI state).

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that multiple (two) TCI states common to UL and DL for multiple (two) TRPs are notified/configured/indicated to a UE (joint TCI states for multiple TRPs).

For example, when it is described as N = 2 and M = 2, this may mean that multiple (two) UL TCI states and multiple (two) DL TCI states for multiple (two) TRPs are notified/configured/indicated to a UE (separate TCI states for multiple TRPs).

For example, when it is described as N = 2 and M = 1, this may mean that two TCI states common to UL and DL are notified/configured/indicated to a UE. In this case, the UE may use the two configured/indicated TCI states as UL TCI states while using one TCI state of the two configured/indicated TCI states as a DL TCI state.

For example, when it is described as N = 2 and M = 1, this may mean that two UL TCI states and one DL TCI state are notified/configured/indicated as separate TCI states to a UE.

Note that, in the above examples, cases where the values of N and M are each one or two have been described, but the values of N and M may each be three or more, and N and M may be different from each other.

A case of M > 1/N > 1 may indicate at least one of a TCI state indication for multiple TRPs and multiple TCI state indications for inter-band (inter band) CA.

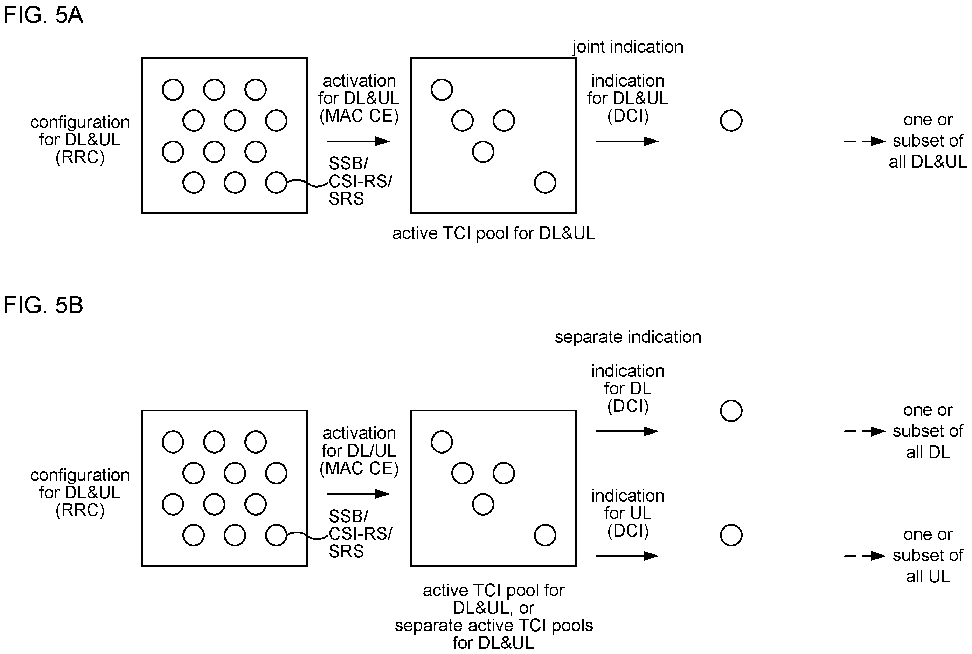

In the example in FIG. 5A, an RRC parameter (information element) configures multiple TCI states for both DL and UL. The MAC CE may activate multiple TCI states among the multiple configured TCI states. DCI may indicate one of the multiple activated TCI states. The DCI may be UL/DL DCI. The indicated TCI state may be applied to at least one (or all) of UL/DL channels/RSs. One DCI may indicate both a UL TCI and a DL TCI.

In the example in FIG. 5A, one dot may represent one TCI state applied to both UL and DL or may represent two respective TCI states applied to UL and DL.

At least one of the multiple TCI states configured by the RRC parameter and the multiple TCI states activated by the MAC CE may be referred to as a TCI pool (common TCI pool, joint TCI pool, TCI state pool). The multiple TCI states activated by the MAC CE may be referred to as an active TCI pool (active common TCI pool).

Note that, in the present disclosure, a higher layer parameter (RRC parameter) that configures multiple TCI states may be referred to as configuration information that configures multiple TCI states or simply as "configuration information." In the present disclosure, one of multiple TCI states being indicated by using DCI may be receiving indication information indicating one of multiple TCI states included in DCI or may simply be receiving "indication information."

In the example in FIG. 5B, an RRC parameter configures multiple TCI states for both DL and UL (joint common TCI pool). A MAC CE may activate multiple TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may indicate a UL TCI and a DL DCI separately.

Existing DCI format 1_1/1_2 may be used for indication of a common TCI state.

The DCI format indicating a TCI state may be a specific DCI format. For example, the specific DCI format may be DCI format 1_1/1_2 (defined in Rel. 15/16/17).

The DCI format indicating a TCI state (DCI format 1_1/1_2) may be a DCI format without DL assignment. In the present disclosure, a DCI format without DL assignment, a DCI format not scheduling a PDSCH (DCI format 1_1/1_2), a DCI format not including one or more specific fields (DCI format 1_1/1_2), a DCI format with one or more specific fields being set at a fixed value(s) (DCI format 1_1/1_2), and the like may be used interchangeably.

For a DCI format without DL assignment (DCI format not including one or more specific fields), the specific field(s) may be a field(s) other than a TCI field, a DCI format identifier field, a carrier indicator field, a bandwidth part (BWP) indicator field, a time domain resource assignment (TDRA) field, a Downlink Assignment Index (DAI) field (if configured), a transmission power control (TPC) command field (for a scheduled PUCCH), a PUCCH resource indicator field, and PDSCH-to-HARQ-ACK feedback timing indicator (PDSCH-to-HARQ feedback timing indicator) field (if present). The specific field(s) may be set as a reserved field(s) or may be ignored.

For a DCI format without DL assignment (DCI format with one or more specific fields being set at a fixed value(s)), the specific field(s) may be a redundancy version (RV) field, a modulation and coding scheme (MCS) field, a new data indicator field, and a frequency domain resource assignment (FDRA) field.

The RV field may be entirely set at 1. The MCS field may be entirely set at 1. The NDI field may be set at 0. A Type 0 FDRA field may be entirely set at 0. A Type 1 FDRA field may be entirely set at 1. An FDRA field for dynamic switch (higher layer parameter dynamicSwitch) may be entirely set at 0.

A common TCI framework may include separate TCI states for DL and UL.

A channel/reference signal (for example, a CH/RS) to which a TCI state indicated by a MAC CE/DCI (for example, an indicated TCI state) is applied may be at least one of the following.

### <PDCCH>

When a higher layer parameter related to application of a common TCI state (for example, followUnifiedTCIstate) is configured for CORESET #0, an indicated TCI state may be applied. Otherwise, a Rel-15 mechanism (for example, a TCI state activated by a MAC CE or QCL with an SSB) may be reused.

The indicated TCI state may always be applied to a CORESET having only USS/CSS type 3 (only USS and/or CSS type 3) (excluding CORESET0).

When a higher layer parameter related to application of a common TCI state (for example, followUnifiedeTCIstate) is configured for a CORESET having at least a CSS excluding CSS type 3 (excluding CORESET0), an indicated TCI state may be applied. Otherwise, a TCI state configured for the CORESET (configured TCI state) may be applied.

### <PDSCH>

An indicated TCI state may always be applied to all UE-dedicated PDSCHs.

When a higher layer parameter related to application of a common TCI state (for example, followUnifiedeTCIstate) is configured for a non-UE dedicated PDSCH, the indicated TCI state may be applied. Otherwise, a TCI state configured for the PDSCH (configured TCI state) may be applied.

### <CSI-RS>

When a higher layer parameter related to application of a common TCI state (for example, followUnifiedeTCIstate) is configured for an A-CSI-RS for CSI acquisition or beam management, an indicated TCI state may be applied. A TCI state configured for a CSI-RS resource (configured TCI state) may be applied to any of other CSI-RSs.

### <PUCCH>

An indicated TCI state may always be applied to all UE-dedicated PUCCH resources (for example, dedicated PUCCH resources).

### <PUSCH>

An indicated TCI state may always be applied to a dynamic grant PUSCH/configured grant PUSCH.

### <SRS>

When a higher layer parameter related to application of a common TCI state (for example, followUnifiedeTCIstate) is configured for an SRS resource set, for an A-SRS for beam management or an A/SP/P-SRS for codebook, non-codebook, or antenna switching, an indicated TCI state may be applied. A TCI state configured for an SRS resource (configured TCI state) may be applied to any of other SRSs.

### (Analysis)

It is studied that a TCI state introduced in Rel. 17 (Rel-17 TCI state, common TCI state) indicates one TCI state (M = 1, N = 1 or M = N = 1). In other words, it is studied that Rel-17 TCI state is applicable only to a situation using a single TRP.

It is studied that a TCI state/spatial relation defined in Rel. 15/16 or previous versions (excluding a TCI state related to a reference signal for positioning) and a Rel-17 TCI state are not configured in the same band.

In this case, in the same band as a band in which the Rel-17 TCI state is configured, a function using a Rel-15/16 TCI state/spatial relation defined in Rel. 15 to Rel. 17 (feature, for example, operation using multi-TRP) cannot be configured.

To address this, it is necessary to enhance a common TCI state (for example, indicate two or more TCI states by using a MAC CE/DCI) in order to support a function using a Rel-15/16 TCI state/spatial relation including a multi-TRP scheme.

For example, for Rel. 18 or later versions, it is studied that a common TCI state is applicable to at least one multi-TRP scheme as those defined in Rel. 16/17 below:
- NCJTed single-DCI based PDSCHs (Rel. 16)
- NCJTed multi-DCI based PDSCHs (Rel. 16)
- single-DCI based SDMed/TDMed/FDMed PDSCH repetition transmission (Rel. 16)
- PDCCH/PUCCH/PUSCH repetition transmission using multiple TRPs (Rel. 17)
- operation related to inter-cell multi-TRP (Rel. 17)
- beam management for multi-TRP (Rel. 17)
- HST/SFN (Rel. 17)

Enhancement of a common TCI state may be used for beam indication in inter-cell (inter-band) carrier aggregation. In the beam indication in inter-cell (inter-band) carrier aggregation, one MAC CE/DCI may be used to indicate one or more TCI states in multiple different bands.

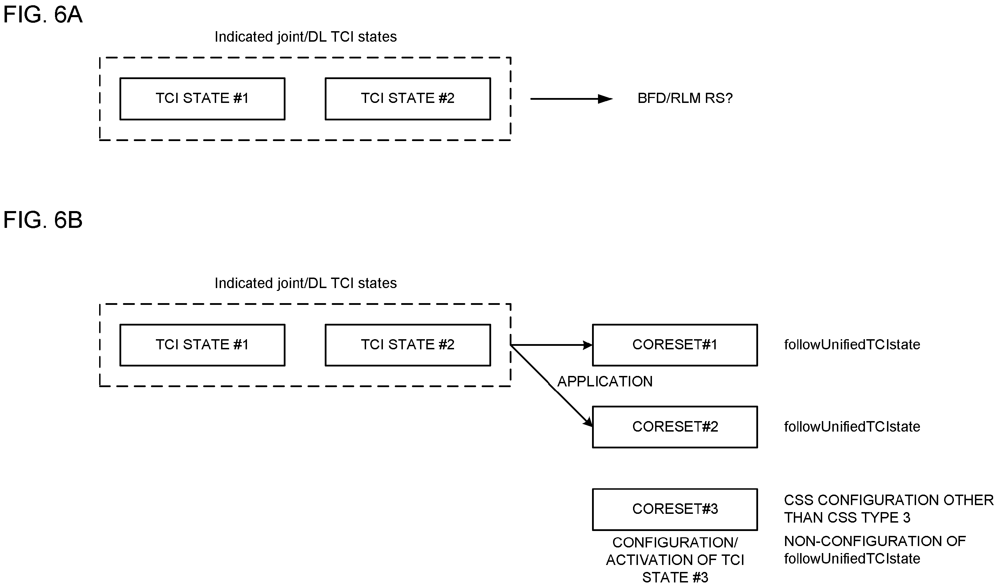

As described above, in Rel. 18 or later versions, a unified TCI framework is enhanced, and it is assumed to also support a case where TCI states with M > 1 and N > 1 are indicated (see FIG. 6A). A problem is how to determine/indicate/configure an implicit BFD/RLM RS when common beams/common TCI states (for example, TCI states indicated by RRC/MAC CE/DCI) are two joint TCI states or two DL TCI states.

For example, in a unified TCI framework, whether an indicated TCI state is applied to a CORESET or not depends on at least one of conditions 1 to 3 below, for example.
- Whether a given higher layer parameter (for example, followUnifiedTCIstate) is configured or not (condition 1)
- Whether the CORESET is CORESET #0 or not (condition 2)
- Whether the CORESET is only USS/CSS type 3 or not (condition 3)

In other cases, a TCI state configured for the CORESET (configured TCI state) is applied instead of the indicated TCI state.

When the same rule as that of an existing system is maintained, it is conceivable to apply a given QCL type (for example, QCL type A/D) of a CORESET as an implicit BFD/RLM RS. When a Rel-17 common TCI state is applied to a CORESET, whether to apply an indicated TCI state to the CORESET depends on the given condition (for example, condition 1 to condition 3).

In Rel. 18 or later versions, it is assumed that a certain CORESET follows (corresponds to) an indicated TCI state while another CORESET does not follow any indicated TCI state (see FIG. 6B).

In FIG. 6B, TCI state #1 and TCI state #2 are included in indicated TCI states, and the indicated TCI states are applied/configured to CORESET #1 and CORESET #2. Here, shown is a case where a higher layer parameter (followUnifiedTCIstate) is configured for CORESET #1 and CORESET #2.

CORESET #1, CORESET #2, and CORESET #3 are configured for a UE, and no indicated TCI state is applied to/configured for CORESET #3. TCI state #3 may be configured activated for CORESET #3. Shown is a case where a CSS excluding CSS type 3 is configured while followUnifiedTCIstate is not configured, for CORESET #3.

As described above, in Rel. 18 or later versions, a case is assumed where a CORESET(s) to which one or more indicated TCI states correspond and a CORESET to which no indicated TCI state corresponds are configured. In such a case, a CORESET selection rule for determining which CORESET is to be associated with an implicit BFD/RLM RS is important.

### <Number of TCI States Necessary for CORESET>

Two TCI states can be configured for a CORESET for which an SFN (for example, SFN scheme A/SFN scheme B) is configured. In other words, to enable an SFN, two TCI states are needed. In other cases, one TCI state is configured (two TCI states are not needed).

### <Number Necessary for BFD RS>

At least two BFD RSs (for example, two BFD RS sets) are needed for detection of TRP-specific BFD in per-TRP BFR (SpCell/SCell) of Rel. 17. In a case of per-TRP BFR of Rel. 17, it is supported to configure four BFD RSs (two for a TRP) at maximum.

At least one BFD RS (for example, one BFD RS set) is needed for detection of a cell-specific BFD in per-cell BFR (SpCell/SCell) of Rel. 15/16. Note that configuration of two BFD RSs at maximum is supported for detection of BFR in a specification.

### <Number Necessary for RLM RS>

At least one RLM RS is needed for detection of cell-specific RLM.

As described above, when a common TCI state to be applied to multiple types of signals/channels is supported and one or more (one or multiple) common TCI states are indicated, how to determine an RS to be used for RLM/BFR (for example, an implicit RLM/BFD RS) is a problem. Alternatively, how to determine an RS to be used for RLM/BFR (for example, an implicit RLM/BFD RS), based on a unit in which BFR is to be performed (per cell/per TRP)/SFN configuration, is a problem.

In view of this, the inventors of the present invention focused on a case where one or more (one or multiple) common TCI states are indicated, studied control of RLM/BFD (BFR) in such a case, and came up with one aspect of the present embodiment.

### <UE After BFD/RLM Completion>

Beam update after BFR completion is supported in a common TCI state of Rel. 17. For example, an indicated TCI state (common/for DL and UL) is updated to q_new.

In a unified TCI framework of Rel. 17, for intra-cell beam management, a UE updates q_new, X symbols after reception of a BFR response signal (BFRR) from a network. For example, after X symbols, the UE assumes the same QCL parameter as a QCL parameter associated with an index q_new, for reception of all PDSCHs/PDCCHs in a CC/cell. In addition, the UE assumes the same QCL parameter as the QCL parameter associated with the index q_new, also for reception of other signals/channels configured to share the same "indicated TCI state" as that of PDSCH/PDCCH reception. q_new corresponds to a candidate beam identified by the UE in a q_1 set, and q_1 corresponds to a set of candidate beams.

In a unified TCI framework of Rel. 17, a UE applies the same UL spatial filter as a UL spatial filter associated with the index q_new or the last PRACH transmission, to all PUSCH transmissions and all PUCCH resources in a CC/cell, X symbols after reception of a BFR response signal (BFRR) from a network. In addition, the UE also applies the same UL spatial filter as the UL spatial filter associated with the index q_new or the last PRACH transmission, to transmission of other signals/channels configured to share the same "indicated TCI state" as that of PUSCH transmission/PUCCH resources.

### <<Application of PRACH-based PCell/PSCell BFR (Rel. 15) to Common TCI State of Rel. 17>>

When a higher layer parameter indicating a common TCI state (for example, TCI-State_r17) for a PCell or a PSCell is provided to a UE, and the UE detects a DCI format CRC-scrambled by a C-RNTI or an MCS-C-RNTI (receives a PDCCH) in a search space set provided by a higher layer parameter (for example, recoverySearchSpaceID), the UE performs the following operation after the last symbol X of the first PDCCH reception.

When the UE is not provided with a higher layer parameter for additional PCI information (AdditionalPCIInfo), the UE monitors a PDCCH in all CORESETs and receives a PDSCH and an aperiodic CSI-RS. The aperiodic CSI-RS may be received in a resource of a CSI-RS resource set having the same "indicated TCI state" as that of the PDCCH and the PDSCH. In this case, the UE uses the same antenna port quasi-co-location parameter as that of an antenna port quasi-co-location associated with a corresponding index q_new, to receive the PDSCH and the aperiodic CSI-RS.

The UE uses the same spatial domain filter as that of the last PRACH transmission, to transmit a PUCCH, a PUSCH, and an SRS using the same spatial domain filter having the same "indicated TCI state" as that of the PUCCH and the PUSCH.

### <<Application of BFR MAC CE-based PCell/PSCell BFR (Rel. 16) to Common TCI State of Rel. 17>>

When a higher layer parameter indicating a common TCI state (for example, TCI-State_r17) for a PCell or a PSCell is provided to a UE, and the UE provides a BFR MAC CE in message 3 or message A of collision-based random access operation, the UE performs the following operation, X symbols after the last symbol of PDCCH reception determining completion of the collision-based random access operation.

When the UE is not provided with a higher layer parameter for additional PCI information (AdditionalPCIInfo), the UE monitors a PDCCH in all CORESETs and receives a PDSCH and an aperiodic CSI-RS. The UE receives an aperiodic CSI-RS in a resource of a CSI-RS resource set indicating the same TCI state as that of the PDCCH and the PDSCH. In this case, the UE uses the same antenna port quasi-co-location parameter as that of an antenna port quasi-co-location associated with a corresponding index q_new, to receive the PDSCH and the aperiodic CSI-RS.

### <<Application of BFR MAC CE-based SCell BFR (Rel. 16) to Common TCI State of Rel. 17>>

When a higher layer parameter indicating a common TCI state (for example, TCI-State_r17) is provided to a UE, the UE performs the following operation, X symbols after the last symbol of PDCCH reception having a DCI format for scheduling PUSCH transmission having the same HARQ process number as that of the first PUSCH transmission and having a toggled NDI field value.

The UE monitors a PDCCH in all CORESETs and receives a PDSCH and an aperiodic CSI-RS. The UE receives an aperiodic CSI-RS in a resource in a CSI-RS resource set using the same antenna port quasi-co-location as the antenna port quasi-co-location associated with a corresponding index qnew.

The UE uses the same spatial domain filter as that of a spatial domain filter corresponding to qnew, to transmit a PUCCH, a PUSCH, and an SRS using the same spatial domain filter and having the same indicated TCI state as that of the PUCCH and the PUSCH.

### <<Application of Per-TRP BFR of BFR MAC CE-based PCell/PSCell/SCell (Rel. 17), based on TCI State/Spatial Relation of Rel. 15/16>>

For serving cells associated with sets q_{0,0} (or q_{0,0}-bar) and q_{1,0} (or q_{1,0}-bar) and sets q_{0,1} (or q_{0,1}-bar) and q_{1,1} (or q_{1,1}-bar), a UE may include and provide an index of a cell having q_{0,0}/q_{0,1} having poorer radio link quality than that of Qout, an index of q_{0,0}/q_{0,1}, indication of the presence of qnew, and a qnew index (from a corresponding set q_{1,0}/q_{1,1} if any), in a second PUSCH MAC CE.

The set q_{0,0} corresponds to a BFD-RS of a first TRP, the set q_{1,0} corresponds to an RS for a candidate beam of the first TRP, the set q_{0,1} corresponds to a BFD-RS of a second TRP, and the set q_{1,1} corresponds to an RS for a candidate beam of the second TRP.

For a serving cell associated with the sets q_{0,0} and q_{1,0} and the sets q_{0,1} and q_{1,1} and having a poorer radio link quality than a given value (Q_{out,LR}), the UE may assume the following antenna port quasi-co-location parameter, a given period after (for example, 28 symbols after) a given symbol. The given symbol may be the last symbol of reception of a first PDCCH scheduling PUSCH transmission having the same HARQ process number as an HARQ process number for transmission of a second PUSCH and having a DCI format having a toggled NDI field value.

The UE may assume an antenna port quasi-co-location parameter corresponding to qnew from q_{1,0}, for a first CORESET.

The UE may assume an antenna port quasi-co-location parameter corresponding to qnew from q_{1,1}, for a second CORESET.

In Rel. 18 or later versions, a unified TCI framework is enhanced, and it is assumed to also support a case where TCI states with M > 1 and N > 1 are indicated. In such a case, problem is how to control UE operation (for example, beam update operation) after BFR completion.

Thus, the inventors of the present invention studied a method of appropriately configuring/indicating/applying UE operation (for example, beam update operation) after BFR/RLM completion even when a TCI state is applied to multiple types of signals/channels in transmission/reception of signals/channels using multi-TRP, and came up with the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be used interchangeably. In the present disclosure, "A/B/C" may mean "at least one of A, B, and C."

In the present disclosure, a cell, a serving cell, a CC, a carrier, a BWP, a DL BWP, a UL BWP, an active DL BWP, an active UL BWP, and a band may be used interchangeably. In the present disclosure, an index, an ID, an indicator, and a resource ID may be used interchangeably. In the present disclosure, a sequence, a list, a set, a group, a cluster, a subset, and the like may be used interchangeably. In the present disclosure, "support," "control," "controllable," "operate," and "operable" may be used interchangeably.

In the present disclosure, configuration (configure), activation (activate), update, indication (indicate), enabling (enable), specification (specify), and selection (select) may be used interchangeably.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be used interchangeably.

The MAC signaling may use, for example, a MAC control element (MAC CE), a MAC Protocol Data Unit (PDU), or the like. In the present disclosure, a MAC CE, an update command, and an activation/deactivation command may be used interchangeably.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be used interchangeably. In the present disclosure, a QCL type X-RS, a DL-RS associated with QCL type X, a DL-RS having QCL type X, a DL-RS source, an SSB, a CSI-RS, and an SRS may be used interchangeably.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be used interchangeably. The UE capability set may include the maximum number of SRS ports supported, for example.

The panel may be related to at least one of a group index of an SSB/CSI-RS group, a group index of group-based beam report, and a group index of an SSB/CSI-RS group for group-based beam report.

A panel Identifier (ID) and a panel may be used interchangeably. In other words, a TRP ID and a TRP, a CORESET group ID and a CORESET group, and the like may be used interchangeably.

In the present disclosure, a TRP, a transmission point, a panel, a DMRS port group, a CORESET pool, and one of two TCI states associated with one codepoint of a TCI field may be used interchangeably.

In the present disclosure, a single TRP, a single-TRP system, single-TRP transmission, and a single PDSCH may be used interchangeably. In the present disclosure, multi-TRP (multiple TRPs), a multi-TRP system, multi-TRP transmission, and multi-PDSCH may be used interchangeably. In the present disclosure, single DCI, a single PDCCH, multi-TRP based on single DCI, and two TCI states in at least one TCI codepoint being activated may be used interchangeably.

In the present disclosure, a single TRP, a channel using a single TRP, a channel using one TCI state/spatial relation, multi-TRP being not enabled by RRC/DCI, multiple TCI states/spatial relations being not enabled by RRC/DCI, and one CORESET pool index (CORESETPoolIndex) value being not configured for any CORESET and any codepoint of a TCI field being not mapped to two TCI states may be used interchangeably.

In the present disclosure, multi-TRP, a channel using multi-TRP, a channel using multiple TCI states/spatial relations, multi-TRP being enabled by RRC/DCI, multiple TCI states/spatial relations being enabled by RRC/DCI, and at least one of multi-TRP based on single DCI and multi-TRP based on multi-DCI may be used interchangeably. In the present disclosure, multi-TRP based on multi-DCI and one CORESET pool index (CORESETPoolIndex) value being configured for a CORESET may be used interchangeably. In the present disclosure, multi-TRP based on single DCI and at least one codepoint in a TCI field being mapped to two TCI states may be used interchangeably.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be used interchangeably.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be used interchangeably.

QCL in the present disclosure and QCL type D may be used interchangeably.

In the present disclosure, "TCI state A is of the same QCL type D as that of TCI state B," "TCI state A and TCI state B are the same," "TCI state A is QCL type D with TCI state B," and the like may be used interchangeably.

In the present disclosure, a codepoint of a DCI field "Transmission Configuration Indication,' a TCI codepoint, a DCI codepoint, and a TCI field codepoint may be used interchangeably.

In the present disclosure, a single TRP and an SFN may be used interchangeably. In the present disclosure, an HST, an HST scheme, a scheme for high speed movement, scheme 1, scheme 2, an NW pre-compensation scheme, HST scheme 1, HST scheme 2, and an HST NW pre-compensation scheme may be used interchangeably.

In the present disclosure, a PDSCH/PDCCH using a single TRP, a PDSCH/PDCCH based on a single TRP, and a single TRP PDSCH/PDCCH may be used interchangeably. In the present disclosure, a PDSCH/PDCCH using an SFN, a PDSCH/PDCCH using an SFN in multi, a PDSCH/PDCCH based on an SFN, and an SFN PDSCH/PDCCH may be used interchangeably.

In the present disclosure, receiving a DL signal (PDSCH/PDCCH) by using an SFN may mean receiving the same data (PDSCH)/control information (PDCCH) and/or by using the same time/frequency resource, from multiple transmission/reception points. Receiving a DL signal by using an SFN may mean receiving the same data/control information and/or by using the same time/frequency resource, by using multiple TCI states/spatial domain filters/beams/QCLs.

In the present disclosure, an HST-SFN scheme, an SFN scheme of Rel. 17 or later versions, a new SFN scheme, a new HST-SFN scheme, an HST-SFN scenario of Rel. 17 or later versions, an HST-SFN scheme for an HST-SFN scenario, an SFN scheme for an HST-SFN scenario, scheme 1, HST-SFN scheme A/B, HST-SFN type A/B, a Doppler pre-compensation scheme, and at least one of scheme 1 (HST scheme 1) and a Doppler pre-compensation scheme may be used interchangeably.

In the present disclosure, a Doppler pre-compensation scheme, a base station pre-compensation scheme, a TRP pre-compensation scheme, a pre-Doppler compensation scheme, an NW pre-compensation scheme, an HST NW pre-compensation scheme, a TRP pre-compensation scheme, a TRP-based pre-compensation scheme, HST-SFN scheme A/B, and HST-SFN type A/B may be used interchangeably. In the present disclosure, a pre-compensation scheme, a reduction scheme, an improvement scheme, and a compensation scheme may be used interchangeably.

In the present disclosure, PDCCHs/search spaces (SSs)/CORESETs having a linkage, linked PDCCHs/SSs/CORESETs, and a pair of PDCCHs/SSs/CORESETs may be used interchangeably. In the present disclosure, a PDCCH/search space (SS)/CORESET having no linkage, a not linked PDCCH/SS/CORESET, and a single PDCCH/SS/CORESET may be used interchangeably.

In the present disclosure, two linked CORESETs for PDCCH repetition and two CORESETs associated with two respective linked SS sets may be used interchangeably.

In the present disclosure, SFN-PDCCH repetition, PDCCH repetition, two linked PDCCHs, one DCI being received over two linked search spaces (SSs)/CORESETs may be used interchangeably.

In the present disclosure, PDCCH repetition, SFN-PDCCH repetition, PDCCH repetition for higher reliability, a PDCCH for higher reliability, a PDCCH for reliability, and two linked PDCCHs may be used interchangeably.

In the present disclosure, a PDCCH reception method, PDCCH repetition, SFN-PDCCH repetition, an HST-SFN, and an HST-SFN scheme may be used interchangeably.

In the present disclosure, a PDSCH reception method, single-DCI based multi-TRP, and an HST-SFN scheme may be used interchangeably.

In the present disclosure, single-DCI based multi-TRP repetition may be NCJT of an enhanced mobile broadband (eMBB) service (low priority, priority degree 0), or may be repetition of a URLLC service, that is, an ultra-reliable and low latency communications service (high priority, priority degree 1).

In each of the embodiments of the present disclosure, a PDSCH for multiple TRPs based on single DCI and a PDSCH to which TDM/FDM/SDM for multiple TRPs (defined in Rel. 16) is applied may be used interchangeably.

In each of the embodiments of the present disclosure, a PDSCH for multiple TRPs and a PDSCH to which TDM/FDM/SDM for multiple TRPs based on single DCI (defined in Rel. 16) is applied may be used interchangeably.

In each of the embodiments of the present disclosure, a PUSCH/PUCCH/PDCCH for multiple TRPs based on single DCI and repetition transmission (repetition) of a PUSCH/PUCCH/PDCCH for multiple TRPs (defined in Rel. 17 or later versions) may be used interchangeably.

In each of the embodiments of the present disclosure, an SFN PDSCH/PDCCH and an SFN PDSCH/PDCCH defined in Rel. 17 or later versions may be used interchangeably.

In each of the embodiments of the present disclosure, use of multiple TRPs based on multi-DCI being configured may mean that CORESET pool index = 1 is configured. Alternatively, use of multiple TRPs based on multi-DCI being configured may mean that two different values (for example, 0 and 1) of a CORESET pool index are configured.

In each of the embodiments of the present disclosure, UL transmission using multiple panels may mean a UL transmission scheme using multiple panels of a UE by DCI enhancement.

In each of the embodiments of the present disclosure, if a joint TCI state/separate TCI state in a unified TCI state framework is not applicable to each channel/signal, the above-described default TCI state/QCL/spatial relation may be used to determine the TCI state/QCL/spatial relation of the channel.

Each of the embodiments of the present disclosure below may be applied to transmission/reception of any channel/signal being a target of application of a unified TCI state framework defined in Rel. 17 or later versions described above.

In the present disclosure, applying a TCI state to each channel/signal/resource may mean applying a TCI state to transmission/reception of each channel/signal/resource.

In the present disclosure, small, little, short, and low may be used interchangeably. In the present disclosure, "ignore," "drop," and the like may be used interchangeably.

In the present disclosure, "highest (largest)" and "lowest (smallest)" may be used interchangeably. In the present disclosure, "the largest" may be interpreted as the "n-th (where n is any natural number)" largest, larger, higher, and the like, and vice versa. In the present disclosure, "the smallest" may be interpreted as the "n-th (where n is any natural number)" smallest, smaller, lower, and the like, and vice versa.

In the present disclosure, repetition, repetition transmission, and repetition reception may be used interchangeably.

In the present disclosure, a channel, a signal, and a channel/signal may be used interchangeably. In the present disclosure, a DL channel, a DL signal, a DL signal/channel, transmission/reception of a DL signal/channel, DL reception, and DL transmission may be used interchangeably. In the present disclosure, a UL channel, a UL signal, a UL signal/channel, transmission/reception of a UL signal/channel, UL reception, and UL transmission may be used interchangeably.

In the present disclosure, a first TCI state may correspond to a first TRP. In the present disclosure, a second TCI state may correspond to a second TRP. In the present disclosure, an n-th TCI state may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of multiple TCI states in transmission/reception using multiple TRPs. However, the number of TRPs may be three or more (more than one), and each embodiment may be applied in accordance with the number of TRPs.

### (Radio Communication Method)

The present embodiment may be applied at least to the following cases. Naturally, cases to which the present embodiment is applied are not limited to these.

A case where a UE is configured with a Rel-17 (or versions later than Rel. 17) TCI state (case 1). The TCI state may be a common TCI state, multiple DL TCI states, or an indicated TCI state.

A case where a UE is "indicated" with multiple common TCI states or multiple DL TCI states by RRC/MAC CE/DCI (case 2). Also a case where an indicated TCI state is applied to a UE-dedicated/non-UE-dedicated PDCCH (for example, a CORESET with a USS/CSS/both).

A case where a UE is "configured" with multiple common TCI states or multiple DL TCI states (case 3). The configuration may be performed on a CORESET by RRC/MAC CE/DCI.

In common TCI of Rel. 17, the CORESET may be a non-UE-dedicated PDCCH (for example, a CORESET with a CSS/CORESET with both a CSS and a USS).

### <Zeroth Embodiment>

In a zeroth embodiment, description will be given of an example of a method of indicating multiple TCI states (for example, common TCI states/indicated TCI states).

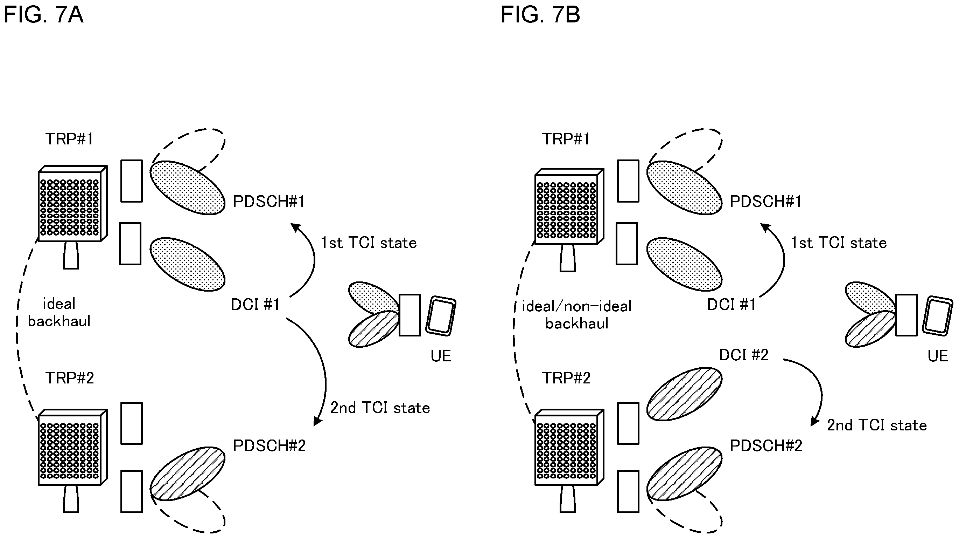

It may be assumed that single-DCI based multi-TRP is supported when multi-TRP uses ideal backhaul (see FIG. 7A).

In this case, one beam indication DCI may indicate multiple (for example, two at maximum) TCI states for the respective TRPs.

In the present disclosure, one TCI state may mean one joint (DL/UL) TCI state or may mean at least one of one DL (separate) TCI state and one UL (separate) TCI state.

It may be assumed that multi-PDCCH (DCI) are supported when multi-TRP use ideal backhaul/non-ideal backhaul (see FIG. 7B).

In this case, one DCI associated with one TRP (CORESET pool index) may indicate a TCI state corresponding to the TRP.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The names are not limited to these.

A field indicating a TCI state (TCI field) included in DCI may conform to at least one of choices 0-1 and 0-2 below.

### {Choice 0-1}

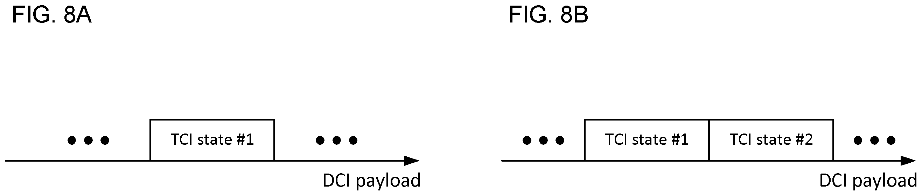

A TCI field defined in Rel. 15/16 or previous versions may be reused (see FIG. 8A). As shown in FIG. 8A, DCI may include one TCI field. The number of bits of the TCI field may be a specific number (for example, three).

### {Choice 0-2}

A TCI field defined in Rel. 15/16 or previous versions may be enhanced (see FIG. 8B). For example, DCI may include multiple (for example, two) TCI fields. The number of bits of each TCI field may be a specific number (for example, three).

In choice 0-2, for DCI without DL assignment, DCI overhead is never added. In contrast, for DCI with DL assignment, DCI overhead is added.

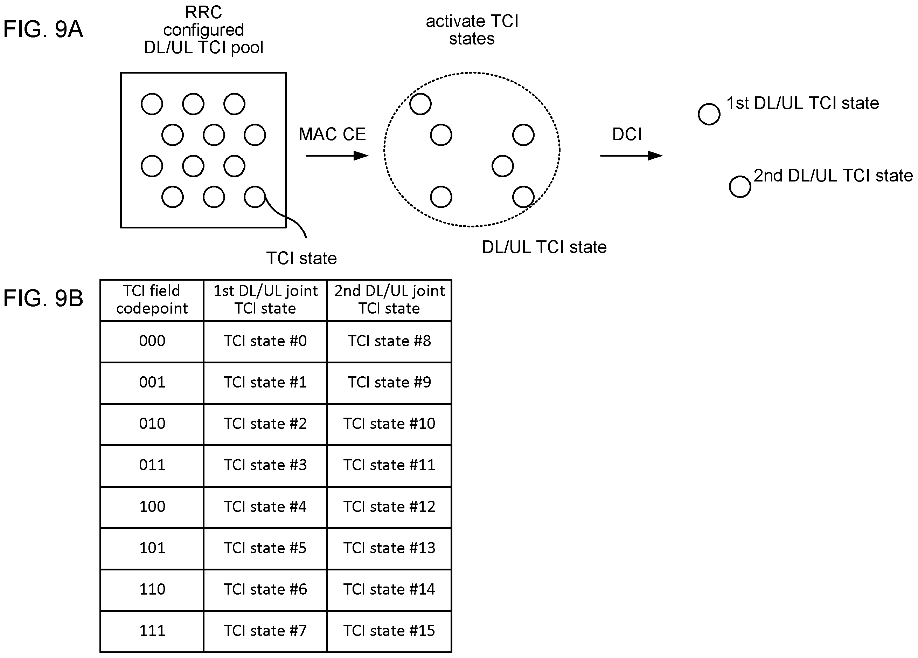

For single-DCI based multi-TRP, in a case of joint TCI states, DL/UL (joint) TCI states may be activated for a UE by using a MAC CE. Subsequently, the UE may be indicated with a first DL/UL (joint) TCI state and a second DL/UL (joint) TCI state by using DCI (beam indication) (see FIG. 9A).

A TCI codepoint indicated by the beam indication may correspond to one or multiple (two) TCI states (first joint TCI state/second joint TCI state) (see FIG. 9B).

The example shown in FIG. 9B shows an example that all the TCI codepoints corresponding to active TCI states each correspond to two TCI states. However, such associations may be used that at least one of the TCI codepoints corresponding to the active TCI states corresponds to two TCI states. Using such association enable dynamic switching between a single TRP and multi-TRP.

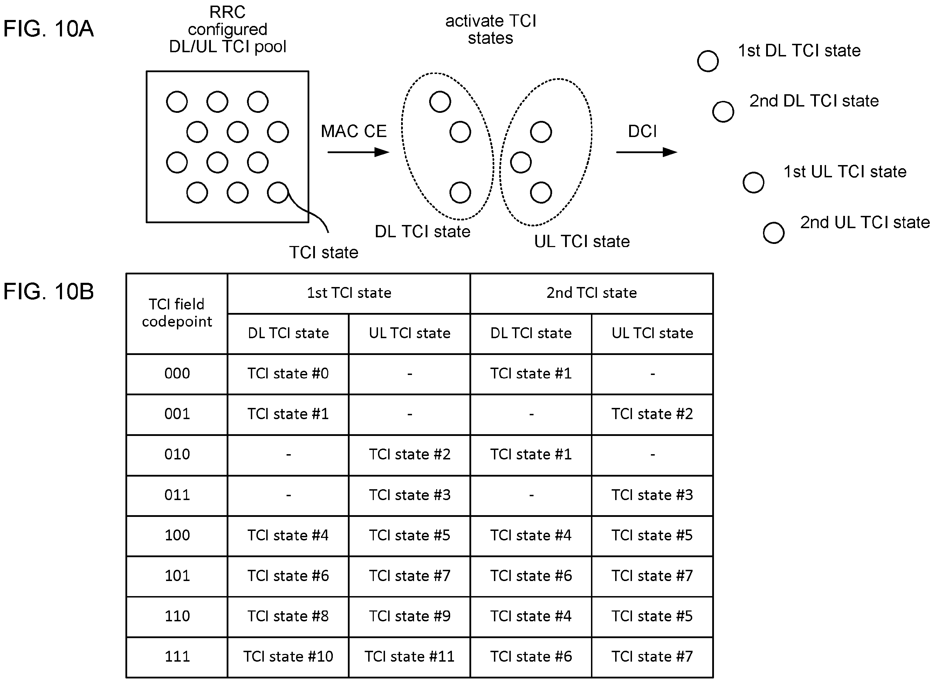

For single-DCI based multi-TRP, in a case of separate TCI states, DL (separate) TCI states and UL (separate) TCI states may be activated for a UE by using a MAC CE. Subsequently, the UE may be indicated with a first DL (separate) TCI state and a first UL (separate) TCI state as well as a second DL (separate) TCI state and a second UL (separate) TCI state by using DCI (beam indication) (see FIG. 10A).

A TCI codepoint indicated by the beam indication may correspond to one or multiple (two) TCI states (first separate (DL/UL) TCI state(s)/second separate (DL/UL) TCI state(s)) (see FIG. 10B).

The example shown in FIG. 10B shows an example that all the TCI codepoints corresponding to active TCI states each correspond to two TCI states (first separate (DL/UL) TCI state(s)/second separate (DL/UL) TCI state(s)). However, such an association may be used that at least one of the TCI codepoints corresponding to the active TCI states corresponds to two TCI states. Using such association enable dynamic switching between a single TRP and multi-TRP.

Note that FIG. 10A shows the example that separate TCI states are activated for a DL TCI state and a UL TCI state, for TCI states activated by a MAC CE. However, even in a case of separate TCI states, activated DL TCI states and UL TCI states may include a common TCI state(s).

For multi-DCI based multi-TRP, at least one of configuration by RRC, activation by a MAC CE, and indication by DCI for TCI states may be performed for each CORESET pool index.

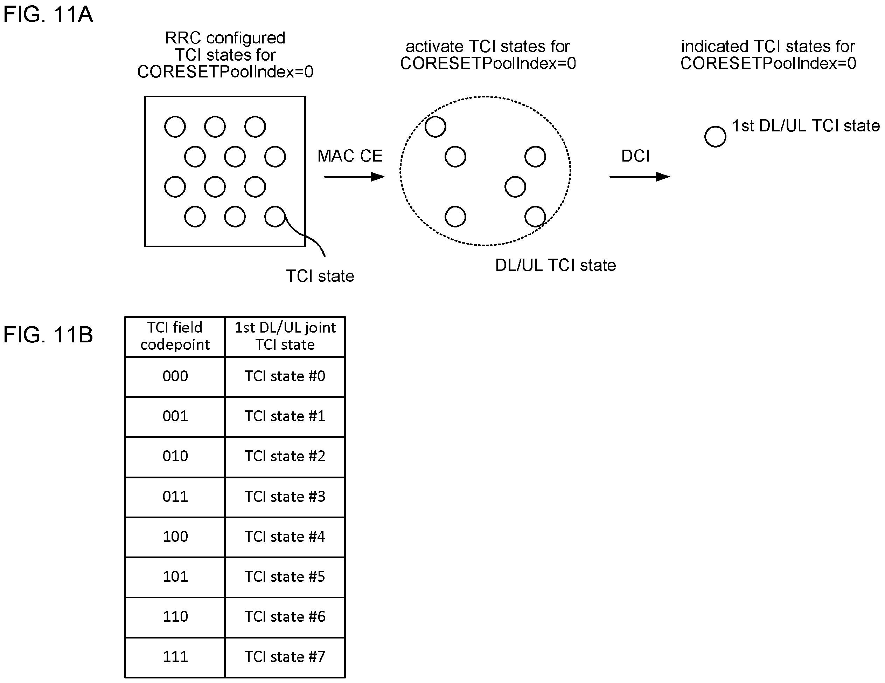

For multi-DCI based multi-TRP, in a case of joint TCI states, configuration by RRC, activation by a MAC CE, and indication by DCI for TCI states may be performed for a UE for a CORESET pool index having a first value (for example, 0) (see FIG. 11A). An indicated TCI state corresponding to the CORESET pool index having the first value may be referred to as a first TCI state.

A TCI codepoint indicated by the beam indication may correspond to one TCI state (first joint TCI state) (see FIG. 11B).

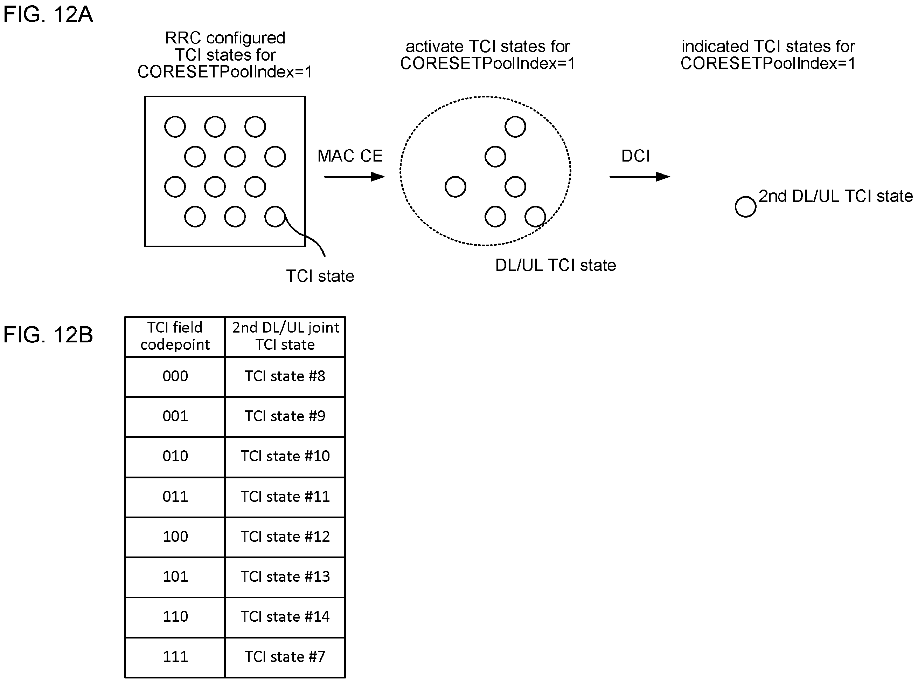

For multi-DCI based multi-TRP, in a case of joint TCI states, configuration by RRC, activation by a MAC CE, and indication by DCI for TCI states may be performed for a UE for a CORESET pool index having a second value (for example, 1) (see FIG. 12A). An indicated TCI state corresponding to the CORESET pool index having the second value may be referred to as a second TCI state.

A TCI codepoint indicated by the beam indication may correspond to one TCI state (second joint TCI state) (see FIG. 12B).

When DCIs corresponding to respective CORESET pool indices indicate the same TCI state (TCI state ID) (for example, when TCI state #7 corresponding to a TCI codepoint "111" in FIG. 11B and FIG. 12B is indicated), the UE may determine that one TCI state is indicated. In this case, the UE may perform operation using a single TRP.

Note that, for the multi-DCI based multi-TRP, an example using joint TCI states has been described. However, this embodiment is also applicable to a case using separate TCI states, as appropriate.

In the present disclosure, an indicated TCI state, a Rel-17 TCI state, a common TCI state, and a unified TCI state may be used interchangeably. In the present disclosure, a common TCI state, a Rel-17 TCI state, and a Rel-18 TCI state applied to channels/signals using multi-TRP may be used interchangeably.

A UE may apply an indicated TCI state to a specific channel/signal.

The specific channel/signal may be a UE-specific (dedicated) DL channel/signal. The UE-specific DL channel/signal may be a UE-specific PDCCH/PDSCH/CSI-RS (for example, aperiodic (A-)CSI-RS).

The specific channel/signal may be a specific UL channel/signal. The specific UL channel/signal may be at least one of a PUSCH indicated by DCI (indicated by dynamic grant), a configured grant PUSCH, multiple (all) specific PUCCHs (resources), and an SRS (for example, an aperiodic (A-)SRS).

One or multiple (for example, two) indicated TCI states may be indicated based on the method described in the zeroth embodiment described above.

### <First Embodiment>

In a first embodiment, description will be given of determination/selection of an implicit BFD RS in a case where multiple indicated TCI states (for example, multiple common TCI states) are supported.

The implicit BFD RS may mean an RS applied to BFD/BFR when no explicit BFD RS (for example, no BFD RS by a higher layer parameter) is configured.

In the following description, description will be given by taking BFD/BFR (or a BFD RS) as an example, but this embodiment may be applied to RLM. In a case of RLM, per-TRP RLM may be supported or need not be supported.

A UE may receive indication information of one or more common TCI states to be applied to multiple signals/channels. When no BFD RS (for example, q₀) to be used for beam failure is configured for a BWP of a certain serving cell, the UE may determine a BFD RS (for example, an implicit BFD RS), based on one or multiple common TCI states among multiple common TCI states.

For example, the UE may determine to include, in the set q0, P-CSI-RS resource configuration indices having the same values as those of the RS indices in the RS set indicated by a common TCI state (TCI-State).

The UE may perform determination/selection of an implicit BFD RS (or an implicit RFL RS), based on at least one of option 1-1 and option 1-2 below.

### {Option 1-1}

When no explicit BFD RS is configured by a higher layer parameter, the UE may determine/select an RS to be applied to BFD (implicit BFD RS) from indicated TCI states. Since an indicated TCI state is applied to a CORESET with a USS/type-3 CSS, application of option 1-1 enables detection of BFD for the CORESET.

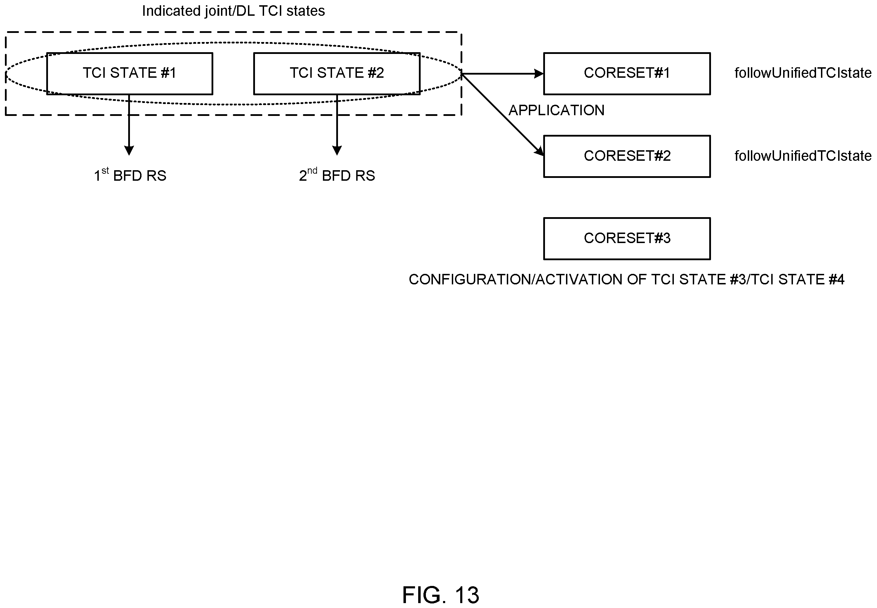

FIG. 13 shows a case with multiple (two in this case) indicated TCI states (common TCI states). Here, shown is a case where CORESETs #1, #2, and #3 are configured for a UE (for example, a BWP of a certain cell) and two common TCI states are applied to CORESET #1 and CORESET #2. Also shown is a case where a higher layer parameter (followUnifiedTCIstate) is configured for CORESET #1 and CORESET #2. Shown is a case where TCI state #3/TCI state #4, which is not a common TCI state, is configured/activated for CORESET #3. For example, this may be a case where a CSS excluding CSS type 3 is configured while followUnifiedTCIstate is not configured, for CORESET #3 (naturally not limited to this).

When there are multiple (for example, two) indicated TCI states, one or multiple indicated TCI states may be selected from the multiple indicated TCI states as a TCI state(s) to be used for determination of an implicit BFD-RS. The TCI state(s) to be used for determination of an implicit BFD-RS (for example, the number of TCI states) may be changed based on an aspect to which BFR is applied or presence/absence of configuration of an SFN. The aspect to which BFR is applied may be whether the application is on a per cell basis or a per TRP basis, for example.

### <<Option 1-1-1>>

Assume a case where per-cell BFR (for example, per cell BFR) is configured/applied and no SFN (for example, SFN scheme A/scheme B) is configured/applied to a CORESET. In such a case, one of multiple (for example, two) indicated TCI states may be applied as a BFD RS (or for determination of a BFD RS).

A UE may select one of the multiple indicated TCI states (TCI state #1 and TCI state #2 in FIG. 13), based on a given condition. For example, the UE may select the first TCI state (or a TCI state with a lower index). In this case, a QCL type A/D RS of the first TCI state is applied as a BFD RS. Without being limited to this, the second TCI state may be selected.

Alternatively, both of multiple (for example, two) indicated TCI states may be selected as BFD RSs. In this case, the UE may determine an implicit BFD RS, based on both the first TCI state and the second TCI state included in the indicated TCI states.

Alternatively, the UE may use a combination of one of the multiple indicated TCI states and one of configured TCI states as BFD RSs.

### <<Option 1-1-2>>

Assume a case where per-cell BFR (for example, per cell BFR) is configured/applied and an SFN (for example, SFN scheme A/scheme B) is configured/applied to a CORESET. In such a case, both of multiple (for example, two) indicated TCI states (TCI state #1 and TCI state #2 in FIG. 13) may be applied as BFD RSs (or for determination of BFD RSs).

For example, a QCL type A/D RS of first TCI state #1 corresponds to a first BFD RS, and a QCL type A/D RS of second TCI state #2 corresponds to a second BFD RS.

### <<Option 1-1-3>>

Assume a case where per-TRP BFR (for example, per TRP BFR) is configured/applied. In such a case, both of multiple (for example, two) indicated TCI states (TCI state #1 and TCI state #2 in FIG. 13) may be applied as BFD RSs (for example, BFD RSs in two BFD-RS sets).

For example, a QCL type A/D RS of first TCI state #1 corresponds to a first BFD RS (or a first BFD RS set), and a QCL type A/D RS of second TCI state #2 corresponds to a second BFD RS (or a second BFD RS set).

### {Option 1-2}

When no explicit BFD RS is configured, a UE may first select a CORESET according to a given higher layer parameter or a given rule determined in advance, and then select/determine an implicit BFD RS, based on a TCI state corresponding to the selected CORESET. In other words, the implicit BFD RS is selected from the indicated TCI state(s) (for example, the common TCI state(s)) or a configured TCI state(s).

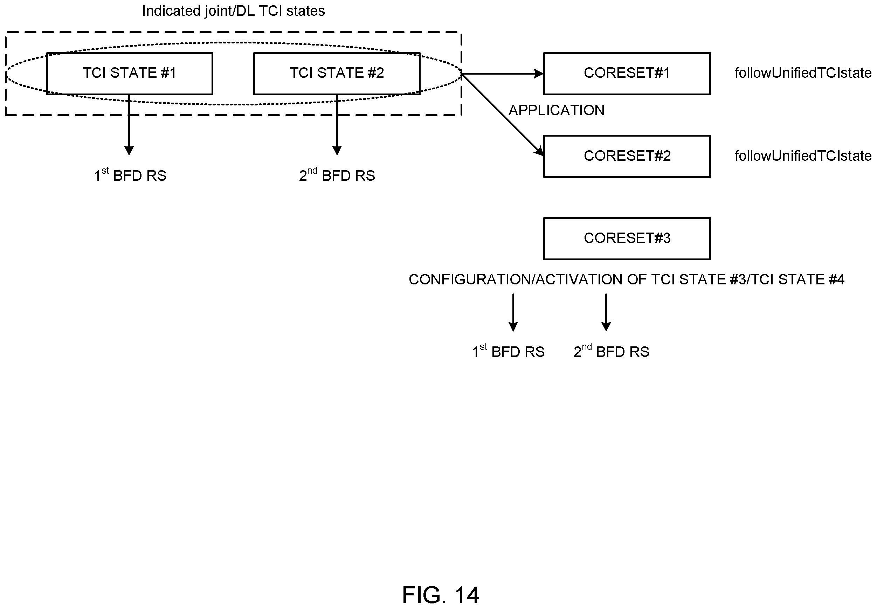

FIG. 14 shows a case with multiple (two in this case) indicated TCI states (common TCI states). Here, shown is a case where CORESETs #1, #2, and #3 are configured for a UE (for example, a BWP of a certain cell) and two common TCI states are applied to CORESET #1 and CORESET #2. Also shown is a case where a higher layer parameter (followUnifiedTCIstate) is configured for CORESET #1 and CORESET #2. Shown is a case where TCI state #3/TCI state #4, which is not a common TCI state, is configured/activated for CORESET #3. For example, this may be a case where a CSS excluding CSS type 3 is configured while followUnifiedTCIstate is not configured, for CORESET #3 (naturally not limited to this).

The UE may select one or multiple CORESETs from among CORESETs #1 to #3, and determine an implicit BFD-RS, based on a TCI state(s) corresponding to the selected CORESET(s).

### <<CORESET Selection>>

The QCL type A/D of a TCI state of a selected CORESET corresponds to a BFD-RS.

The ID of a CORESET to be used for determination of an implicit BFD RS may be determined by higher layer signaling. For example, the UE may determine a CORESET ID to be used for the determination of an implicit BFD RS, based on a given higher layer parameter.

Alternatively, the ID of a CORESET to be used for the determination of an implicit BFD RS may be determined based on a given rule. The given rule may be a rule for determination with reference to at least one of a CORESET ID, monitoring periodicity, and the number of TCI states to be activated for the COREEST, for example. For example, a CORESET having the highest/lowest CORESET ID with the shortest/longest monitoring periodicity may be selected.

Alternatively, the given rule may be whether the CORESET conforms to a common TCI state (or an indicated TCI state). For example, the given rule may be whether a given higher layer parameter (for example, followUnifiedTCIstate) is configured for the CORESET, whether the CORESET is CORESET #0, or whether the CORESET is USS/CSS type 3 only.

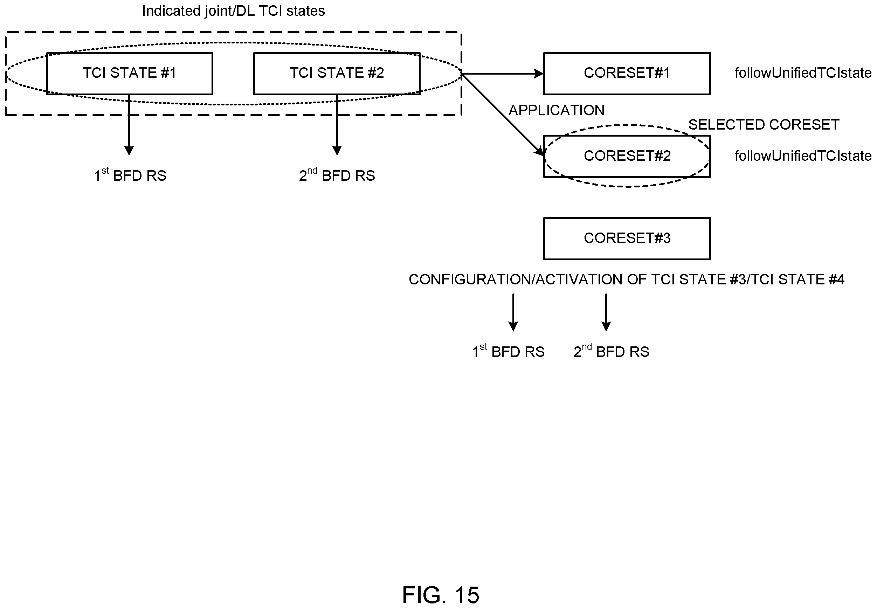

In the determination of an implicit BFD RS, a CORESET corresponding to an indicated TCI state may be selected first/last (or with a high/low priority). As an example, when a CORESET to which an indicated TCI state is applied is configured (or is present), the UE may select at least the CORESET (see FIG. 15). FIG. 15 shows a case where CORESET #2 to which an indicated TCI state is applied is selected.

The UE may select one or multiple CORESETs for the determination of a BFD RS. For example, for per-cell BFR (for example, an SFN CORESET/non-SFN CORESET (SFN configuration/non-SFN configuration)), one CORESET may be selected for determination of one or two BFD RSs. In contrast, for per-TRP BFR, two CORESETs may be selected for the determination of two BFD RSs at maximum. As described above, the number of CORESETs to be selected may be determined based on a unit in which BFR is to be performed (for example, per cell/per TRP).

### <<Implicit BFD RS Determination Rule based on Selected CORESET>>

### - Case where a selected CORESET conforms to an indicated TCI state (common TCI state)

When the selected CORESET conforms to/corresponds to the indicated TCI state (see FIG. 15), option 1-1 may be applied.

### - Case where a selected CORESET does not conform to an indicated TCI state (common TCI state)

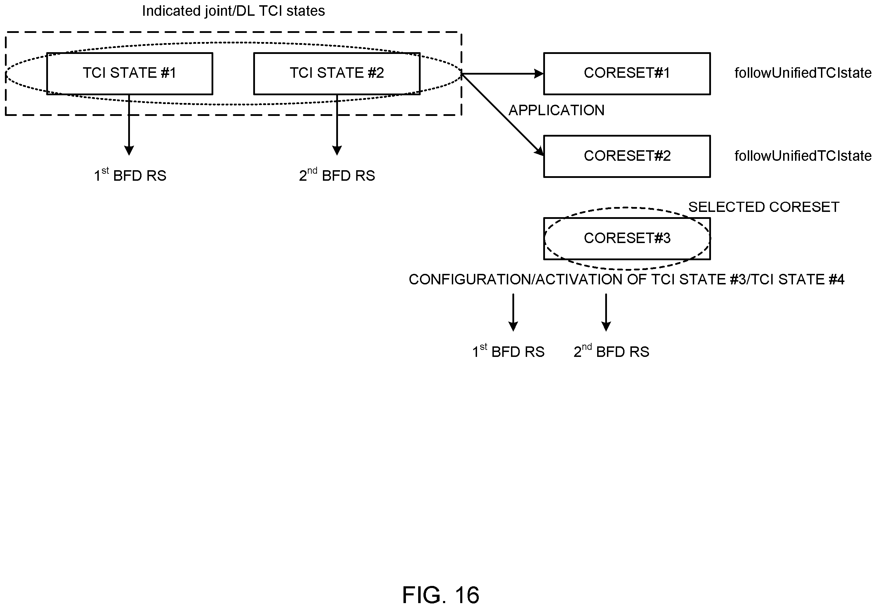

When the selected CORESET does not conform to/correspond to the indicated TCI state (see FIG. 16), a TCI state configured for the CORESET (TCI state #3/TCI state #4 in FIG. 16) may be applied to BFD.

When there are multiple (for example, two) configured TCI states, one or multiple configured TCI states may be selected from the multiple configured TCI states as a TCI state(s) to be used for determination of an implicit BFD-RS. The TCI state(s) to be used for determination of an implicit BFD-RS (for example, the number of TCI states) may be changed based on an aspect to which BFR is applied or presence/absence of configuration of an SFN. The aspect to which BFR is applied may be whether the application is on a per cell basis or on a per TRP basis, for example.

Assume a case where per-cell BFR (for example, per cell BFR) is configured/applied and no SFN (for example, SFN scheme A/scheme B) is configured/applied to a CORESET. In such a case, one of the multiple (for example, two) configured TCI states (TCI state #3/TCI state #4 in FIG. 16) may be applied as a BFD RS. When multiple TCI states are configured for the CORESET, one TCI state may be selected. For example, the first TCI state may be selected. In this case, a QCL type A/D RS of the first TCI state corresponds to a BFD RS.

Assume a case where per-cell BFR (for example, per cell BFR) is configured/applied and an SFN (for example, SFN scheme A/scheme B) is configured/applied to a CORESET. In such a case, both of the multiple (for example, two) configured TCI states (TCI state #3/TCI state #4 in FIG. 16) may be applied as BFD RSs. For example, a QCL type A/D RS of first TCI state #1 corresponds to a first BFD RS, and a QCL type A/D RS of second TCI state #2 corresponds to a second BFD RS.

Assume a case where per-TRP BFR (for example, per TRP BFR) is configured/applied. In such a case, both of multiple (for example, two) configured TCI states (TCI state #3/TCI state #4 in FIG. 16) may be applied as BFD RSs (for example, BFD RSs in two BFD-RS sets).

For example, a QCL type A/D RS of first TCI state #1 corresponds to a first BFD RS (or a first BFD RS set), and a QCL type A/D RS of second TCI state #2 corresponds to a second BFD RS (or a second BFD RS set).

### <Second Embodiment>

In a second embodiment, description will be given of UE operation after BFR completion in a case where multiple indicated TCI states (for example, multiple common TCI states) are supported.

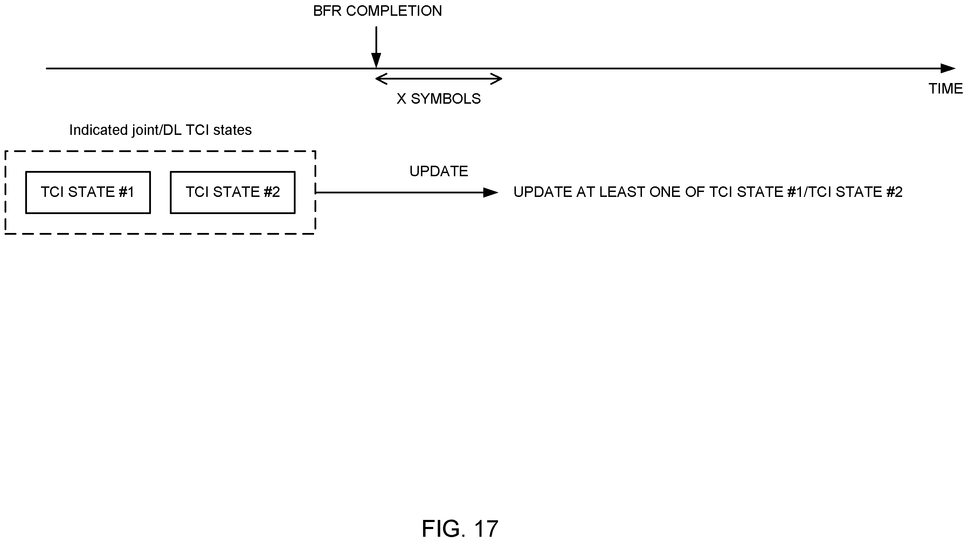

X symbols (for example, X = 28) after the BFR completion, at least one of an "indicated TCI state" and QCL/spatial domain filter of one or more channels/signals sharing the "indicated TCI states" may be updated to qnew (see FIG. 17).

The one or more channels/signals sharing the "indicated TCI states" may be at least one of a PDCCH, a PDSCH, a CSI-RS, a PUCCH, a PUSCH, and an SRS, for example. qnew corresponds to a candidate beam (or a candidate beam index, a reference signal index corresponding to a candidate beam, or a reference signal index for BFR). For example, the indicated TCI state may be updated to a TCI state of a reference signal index corresponding to qnew.

### {Option 2-1}

It may be configured that, after BFR completion, one TCI state is configured/applied as an indicated TCI state. In other words, after BFR, it may be fallen back to single-TRP operation.

The operation may be applied when given BFR is configured. Given BFR operation may be BFR supported in Rel. 15/16, for example. The BFR supported in Rel. 15/16 may be at least one of BFR of a PRACH-based PCell/PSCell, BFR of BFR MAC CE-based PCell/PSCell, and BFR of a BFR MAC CE-based SCell.

For example, a case where a common TCI state supported in Rel. 17 is used in PRACH-based PCell/PSCell BFR supported in Rel. 15 is assumed.

When a higher layer parameter indicating a common TCI state (for example, TCI-State_r17/TCI-State_r18) for a PCell or a PSCell is provided to a UE, and the UE detects a DCI format CRC-scrambled by a C-RNTI or an MCS-C-RNTI in a search space set provided by a higher layer parameter (for example, recoverySearchSpaceID), the UE performs the following operation after the last symbol X of the first PDCCH reception.

When the UE is not provided with a higher layer parameter for additional PCI information (AdditionalPCIInfo), the UE monitors a PDCCH in all CORESETs and receives a PDSCH and an aperiodic CSI-RS. The aperiodic CSI-RS may be received in a resource of a CSI-RS resource set having the same TCI state as at least one of multiple "indicated TCI states" of a PDCCH and a PDSCH. In this case, the UE uses the same antenna port quasi-co-location parameter as that of an antenna port quasi-co-location associated with a corresponding index q_new, to receive the PDSCH and the aperiodic CSI-RS.

The UE uses the same spatial domain filter as that of the last PRACH transmission, to transmit a PUCCH, a PUSCH, and an SRS using the same spatial domain filter having the same "indicated TCI state" as that of the PUCCH and the PUSCH.

### {Option 2-2}

It may be configured that, after BFR completion, one or multiple TCI states are configured/applied as an indicated TCI state(s). In other words, after BFR, configuration/application of multiple TCI states may be supported (for example, after BFR, recovery to multi-TRP operation may be supported).

The operation may be applied when given BFR is configured. Given BFR operation may be per-TRP BFR (or BFR supported in Rel. 17), for example.

In this case, in consideration of a case where per-TRP BFR and a common TCI state are applied in combination, UE operation after BFR completion is controlled.

Assume a case where per-TRP BFR (or two sets of new beam identification RSs/RSs for candidate beam) and a common TCI state (for example, Rel-17/18 TCI state) are configured. In other words, assume a case where, for a serving cell with which the sets q_{0,0} and q_{1,0} and the sets g_{0,1} and q_{1,1} are associated, a higher layer parameter indicating a common TCI state (for example, TCI-State_r17/TCI-State_r18) is configured.

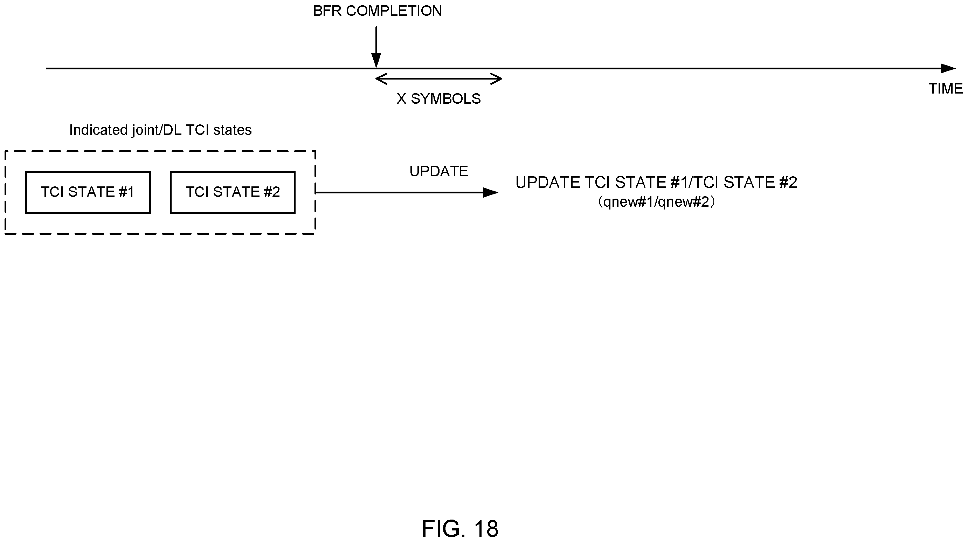

When the UE identifies RSs of two qnews (and/or when there are multiple indicated TCI states (common TCI states) before BFR), the indicated TCI states may be updated to first qnew #1 and second qnew #2 (see FIG. 18).

X symbols after the last symbol after BFR completion, the indicated TCI states {first TCI state, second TCI state} may be updated to {qnew #1, qnew #2}.

A TCI state/QCL/spatial domain filter of one or more channels/signals sharing the indicated TCI states may be updated to the indicated TCI states {first TCI state, second TCI state} (in other words, {qnew #1, qnew #2}). The one or more channels/signals sharing the indicated TCI states may be at least one of a PDCCH/PDSCH/CSI-RS/PUCCH/PUSCH/SRS.

The resource of the PDCCH/PDSCH/CSI-RS/PUCCH/PUSCH/SRS may be associated with the first TCI state or the second TCI state. Hence, the resource of the PDCCH/PDSCH/CSI-RS/PUCCH/PUSCH/SRS associated with the first TCI state/second TCI state may be updated to qnew #1/qnew #2.

When a channel/RS requires one TCI state, the one TCI state may be selected (or may be selected and updated) from qnew #1/qnew #2 (or first TCI state #1/second TCI state #2).

A channel/RS is multiple TCI states (for example, SFN-CORESET, M-TRP PDSCH, M-TRP PUSCH/PUCCH/PDSCH/PDCCH repetition), multiple (for example, both) TCI states #1 and #2 (or both qnew #1 and qnew #2) may be used.

Note that a case where operation of option 2-2 is applied to a case where per-TRP BFR is configured has been described in the above description, but this is not restrictive. For example, when an SFN (or an SFN scheme) is configured for a CORESET (irrespective of which BFR scheme is applied), option 2-2 may be applied.

Note that per-TRP BFR in a BFR MAC CE-based PCell/PSCell/SCell for a CORESET/PDSCH/CSI-RS having a "configured" TCI state (or not sharing an "indicated" TCI state) may be applied.

Note that the present embodiment is preferably applied at least to multi-DCI-based multi-TRP but may be applied to single-DCI-based multi-TRP.

### <Other Embodiments>

A higher layer parameter (RRC IE)/UE capability corresponding to a function (characteristics, feature) of at least one of the plurality of embodiments above may be defined. The UE capability may indicate support of this function.

A UE configured with the higher layer parameter corresponding to the function (enabling the function) may perform the function. A "UE not configured with the higher layer parameter corresponding to the function does not perform the function (for example, follows Rel. 15/16)" may be defined.

A UE that has reported the UE capability indicating support of the function may perform the function. A "UE that has not reported UE capability indicating support of the function does not perform the function (for example, follows Rel. 15/16)" may be defined.

When a UE reports the UE capability indicating support of the function and is also configured with the higher layer parameter corresponding to the function, the UE may perform the function. "When a UE does not report the UE capability indicating support of the function or when a UE is not configured with the higher layer parameter corresponding to the function, the UE does not perform the function (for example, follows Rel. 15/16)" may be defined.

The UE capability may indicate whether the UE supports this function.

The function may be application of Rel-17/18 TCI state or a common TCI state (TCI state to be applied to multiple resources/RSs/channels).

The function may be application of TCI states with M > 1 and N >1.

The UE capability may be defined by whether nor not to support TCI states with M > 1 and N > 1 (or Rel-17/18 common TCI state).

The UE capability may be defined by whether nor not to support BFR using TCI states with M > 1 and N > 1 (or Rel-17/18 common TCI state).

The UE capability may be defined by whether nor not to support a separate or joint report of the following BFR scheme.
- PRACH-based PCell/PSCell BFR (for example, Rel. 15)
- BFR MAC CE-based PCell/PSCell BFR (for example, Rel. 16), (BFR MAC CE in message 3/message A)
- BFR MAC CE-based SCell BFR (for example, Rel. 16)
- Per-TRP BFR of BFR MAC CE-based PCell/PSCell/SCell (for example, Rel. 17)

The UE capability may be defined by whether nor not to support multiple qnews for updating multiple "indicated" TCI states.

According to the other embodiments above, the UE can implement the above functions while maintaining compatibility with an existing specification.

### (Supplementary Notes)

In relation to one embodiment of the present disclosure, the following invention is supplemented.

### {Supplementary Note 1-1}

A terminal including: a receiving section that receives indication information of multiple transmission configuration indication (TCI) states to be applied to multiple signals; and a control section that determines, when a reference signal for beam failure detection to be used for beam failure detection or a reference signal for radio link monitoring to be used for radio link monitoring is not configured, the reference signal for beam failure detection or the reference signal for radio link monitoring, based on one or multiple TCI states among the multiple TCI states.

### {Supplementary Note 1-2}

The terminal according to supplementary note 1-1, wherein, when a TCI state to be applied to the multiple signals is indicated and a TCI state different from the TCI state to be applied to the multiple signals is configured, the control section determines the reference signal for beam failure detection or the reference signal for radio link monitoring, based on the TCI state to be applied to the multiple signals.

### {Supplementary Note 1-3}

The terminal according to supplementary note 1-1 or 1-2, wherein the control section selects a certain control resource set, and determines the reference signal for beam failure detection or the reference signal for radio link monitoring, based on a TCI state corresponding to the control resource set thus selected.

### {Supplementary Note 1-4}

The terminal according to any one of supplementary notes 1-1 to 1-3, wherein the control section determines the number of TCI states to use for determination of the reference signal for beam failure detection, based on whether or not the beam failure detection is on a per cell basis or on a per transmission/reception point basis.

### {Supplementary Note 2-1}

A terminal including: a receiving section that receives indication information of multiple transmission configuration indication (TCI) states to be applied to multiple signals; and a control section that performs a beam failure recovery procedure, wherein the control section updates at least one of the multiple TCI states to be applied to the multiple signals a given period after completion of the beam failure recovery procedure.

### {Supplementary Note 2-2}

The terminal according to supplementary note 2-1, wherein the control section updates only one of the multiple TCI states to be applied to the multiple signals the given period after the completion of the beam failure recovery procedure.

### {Supplementary Note 2-3}

The terminal according to supplementary note 2-1 or 2-2, wherein the control section updates the multiple TCI states to be applied to the multiple signals the given period after the completion of the beam failure recovery procedure.

### {Supplementary Note 2-4}

The terminal according to any one of supplementary notes 2-1 to 2-3, wherein the control section determines the number of TCI states to be updated the given period after the completion of the beam failure recovery procedure, based on whether or not the beam failure detection is on a per cell basis or on a per transmission/reception point basis.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

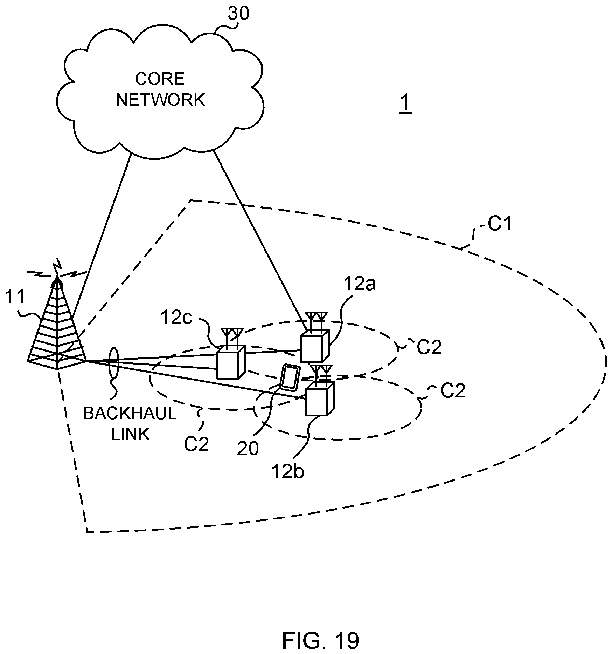

FIG. 19 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be transmitted as an uplink reference signal (UL-RS). Note that DMRS may be referred to as a "user terminal specific reference signal (UE-specific Reference Signal)."

### (Base Station)

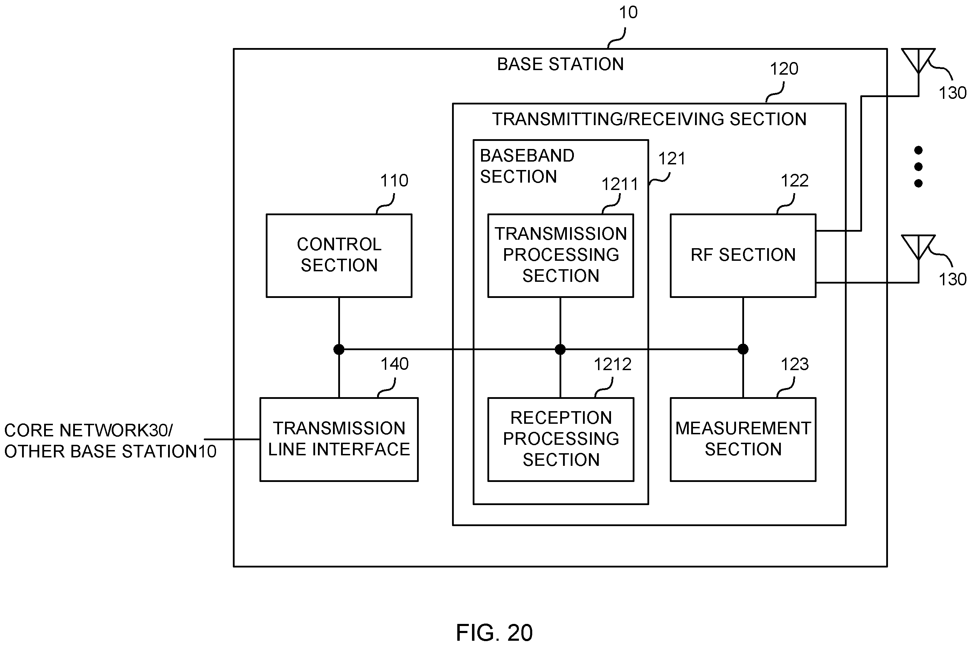

FIG. 20 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit indication information of multiple transmission configuration indication (TCI) states to be applied to multiple signals. The control section 110 may determine that a reference signal for beam failure detection or a reference signal for radio link monitoring determined based on one or multiple TCI states among the multiple TCI states is to be used in the terminal, when a reference signal for beam failure detection to be used for beam failure or a reference signal for radio link monitoring to be used for radio link monitoring is not configured.

The control section 110 may control a beam failure recovery procedure. The control section 110 may perform control to update at least one of the multiple TCI states to be applied to the multiple signals a given period after completion of the beam failure recovery procedure.

### (User Terminal)

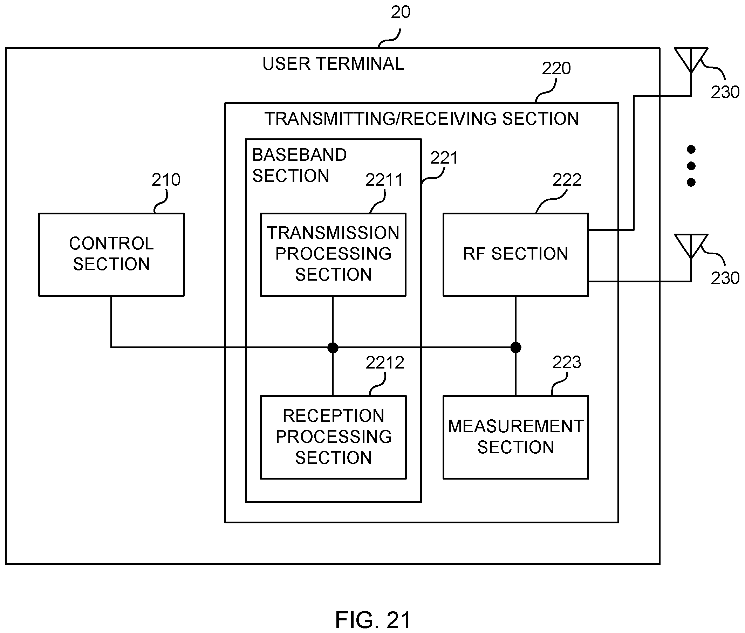

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive indication information of multiple transmission configuration indication (TCI) states to be applied to multiple signals. The control section 210 may determine a reference signal for beam failure detection or a reference signal for radio link monitoring, based on one or multiple TCI states among the multiple TCI states, when a reference signal for beam failure detection to be used for beam failure detection or a reference signal for radio link monitoring to be used for radio link monitoring is not configured. When a TCI state to be applied to the multiple signals is indicated and a TCI state different from the TCI state to be applied to the multiple signals is configured, the control section 210 may determine the reference signal for beam failure detection or the reference signal for radio link monitoring, based on the TCI state to be applied to the multiple signals. The control section 210 may select a given control resource set, and determine the reference signal for beam failure detection or the reference signal for radio link monitoring, based on a TCI state corresponding to the control resource set thus selected. The control section 210 may determine the number of TCI states to use for determination of the reference signal for beam failure detection, based on whether or not the beam failure detection is on a per cell basis or on a per transmission/reception point basis.

The control section 210 may control a beam failure recovery procedure. The control section 210 may perform control to update at least one of the multiple TCI states to be applied to the multiple signals a given period after completion of the beam failure recovery procedure. The control section 210 may update only one of the multiple TCI states to be applied to the multiple signals the given period after the completion of the beam failure recovery procedure. The control section 210 may update the multiple TCI states to be applied to the multiple signals the given period after the completion of the beam failure recovery procedure. The control section 210 may determine the number of TCI states to be updated the given period after the completion of the beam failure recovery procedure, based on whether or not the beam failure detection is on a per cell basis or on a per transmission/reception point basis.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the multiple apparatuses described above.

Here, functions include determination, judgment, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

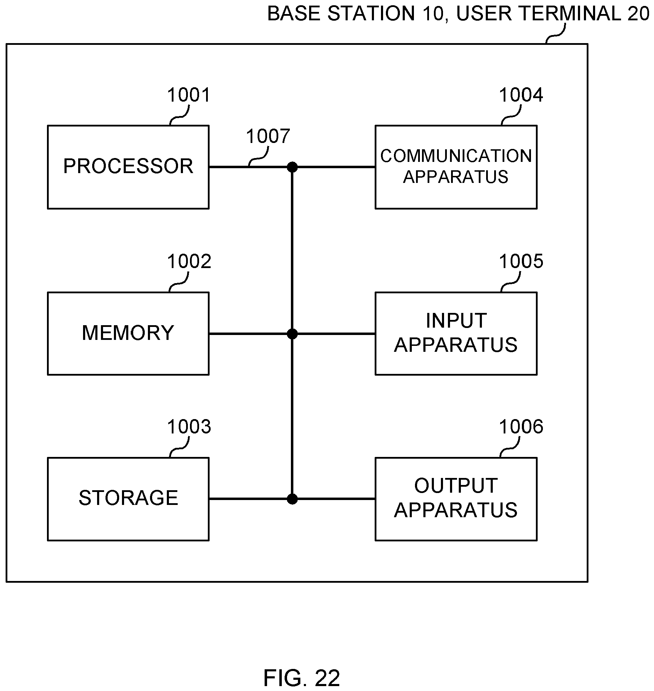

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be used interchangeably. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be used interchangeably.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "X holds") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal may be interpreted as the base station indicating control/operation based on the information to the terminal, and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

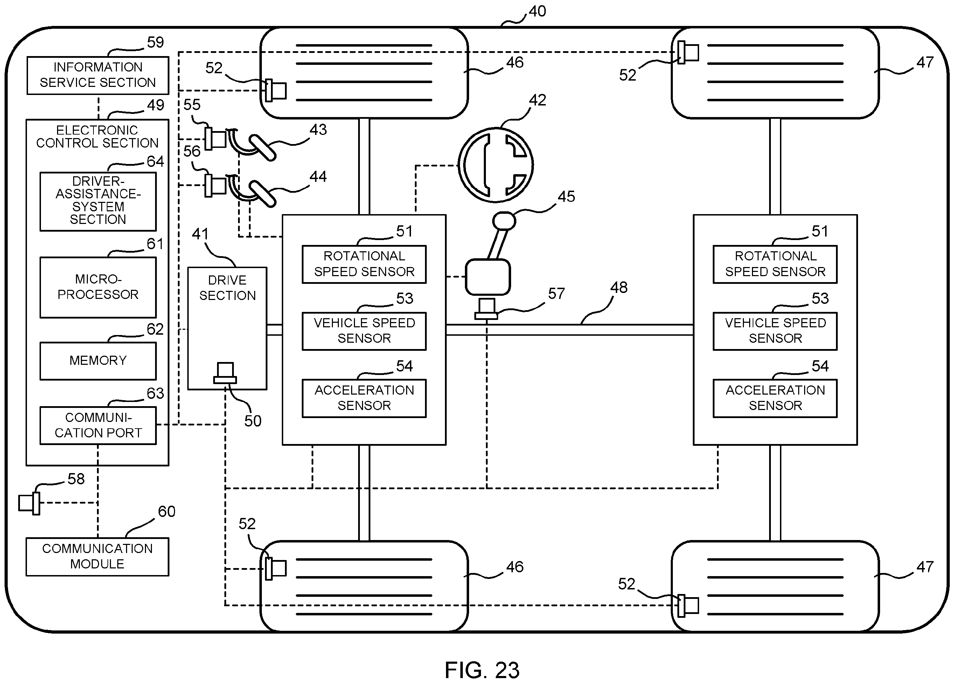

FIG. 23 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the drive section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B is different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or less than," "less than," "equal to or more than," "more than," "equal to," and the like may be used interchangeably. In the present disclosure, the words meaning "good, " "bad, " "large, " "small, " "high, " "low, " "early, " "late, " "wide, " "narrow," and the like may be used interchangeably without distinction of positive, comparative, and superlative. In the present disclosure, the words meaning "good," "bad," "large," "small," "high," "low," "early," "late," "wide," "narrow," and the like may be used interchangeably with expressions of those with "i-th" prefixed without distinction of positive, comparative, and superlative (for example, "highest" and "i-th highest" may be used interchangeably).

In the present disclosure, "of," "for," "regarding," "related to," "associated with," and the like may be used interchangeably.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives indication information of multiple transmission configuration indication (TCI) states to be applied to multiple signals; and
a control section that determines, when a reference signal for beam failure detection to be used for beam failure detection or a reference signal for radio link monitoring to be used for radio link monitoring is not configured, the reference signal for beam failure detection or the reference signal for radio link monitoring, based on one or multiple TCI states among the multiple TCI states.

2. The terminal according to claim 1, wherein, when a TCI state to be applied to the multiple signals is indicated and a TCI state different from the TCI state to be applied to the multiple signals is configured, the control section determines the reference signal for beam failure detection or the reference signal for radio link monitoring, based on the TCI state to be applied to the multiple signals.

3. The terminal according to claim 1, wherein the control section selects a given control resource set, and determines the reference signal for beam failure detection or the reference signal for radio link monitoring, based on a TCI state corresponding to the selected control resource set.

4. The terminal according to claim 1, wherein the control section determines the number of TCI states to use for determination of the reference signal for beam failure detection, based on whether or not the beam failure detection is on a per cell basis or on a per transmission/reception point basis.

5. A radio communication method for a terminal, the radio communication method comprising:
receiving indication information of multiple transmission configuration indication (TCI) states to be applied to multiple signals; and
determining, when a reference signal for beam failure detection to be used for beam failure detection or a reference signal for radio link monitoring to be used for radio link monitoring is not configured, the reference signal for beam failure detection or the reference signal for radio link monitoring, based on one or multiple TCI states among the multiple TCI states.

6. A base station comprising:
a transmitting section that transmits, to a terminal, indication information of multiple transmission configuration indication (TCI) states to be applied to multiple signals; and
a control section that determines, when a reference signal for beam failure detection to be used for beam failure detection or a reference signal for radio link monitoring to be used for radio link monitoring is not configured, that a reference signal for beam failure detection or a reference signal for radio link monitoring determined based on one or multiple TCI states among the multiple TCI states is to be used in the terminal.
